# EUROPEAN PATENT APPLICATION

(11) **EP 4 618 202 A1**
(43) Date of publication of application: **17.09.2025**
(21) Application number: 25161821.1
(22) Date of filing: 05.03.2025
(51) Int. Cl.: H01M 8/0273, H01M 8/1004, H01M 8/242, H01M 8/10

(54) **FRAMING ASSEMBLY FOR AN ELECTROCHEMICAL CELL AND METHOD OF USING THE SAME**

(30) Priority: 15.03.2024 US 202463565952 P
(71) Applicant: Hydrogenics Corporation, Mississauga, ON L5T 2N6 (CA)
(72) Inventor: Shrivastava, Udit N., Indianapolis, 46204 (US); Eastcott, Jennie, Oakville, L6H 6J6 (CA); Bell, Ellsworth William, Etobioke, M8X 1A5 (CA); Sinanan, Anson, Brampton, L7A 4N2 (CA); St-Pierre, Jean, Indianapolis, 46237 (US); Stewart-Thomas, Kerrilee, Mississauga, L5T 2N6 (CA); Alaefour, Ibrahim, Waterloo, N2V 1C1 (CA); Cruz, Jaaziel Del Mundo, Brampton, L6Y 5G3 (CA); Harinath, Arvind V., Columbus, 47201 (US)
(74) Representative: Marks & Clerk Cummins

(57) **Abstract**

A frame assembly includes an electrochemical cell, a frame, and a reinforcement system. The electrochemical cell includes a first catalyst layer, a second catalyst layer spaced apart from the first catalyst layer, and a membrane located between the first catalyst layer and the second catalyst layer. The frame includes an upper frame arranged above the membrane and a lower frame arranged below the membrane. The reinforcement system is configured to increase a mechanical stability of the electrochemical cell.

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/565,952 filed on March 15, 2024, the entire disclosure of which is hereby expressly incorporated herein by reference.

### TECHNICAL FIELD

The present disclosure relates to a framing assembly for an electrochemical cell and methods of using the framing assembly to provide increased mechanical stability to the electrochemical cell.

### BACKGROUND

Fuel cell systems are known for their efficient use of fuel to produce direct current electric energy to power mobile applications, such as, for example, vehicles, trains, buses, and trucks. Electrolyzer systems are known for their efficient use of water and electricity to produce hydrogen and oxygen. Typical fuel cells and electrolyzer cells include multi-component membrane electrode assemblies that enable electrochemical reactions, and are therefore, both referred to as electrochemical cells.

Membranes of membrane electrode assemblies are prone to failure near outer edges of the membrane. The outer edges of the membrane are non-active areas of the membrane, which form an interface with adjacent layers of the membrane electrode assembly. The non-active areas of the membrane may not be suitable for forming a robust mechanical interface to meet durability requirements of the cell. Thus, it may be advantageous to increase the mechanical stability of the membrane electrode assembly near the outer edges of the membrane. However, owing to the large thickness of some membranes, some electrolyzer membranes and some fuel cell membranes may not be suitable for framing.

Therefore, the present disclosure is directed to a framing assembly for an electrochemical cell and methods of using the framing assembly to increase the mechanical stability of the electrochemical cell.

### SUMMARY

Embodiments of the present disclosure are included to meet these and other needs.

In one aspect described herein, a frame assembly comprises an electrochemical cell, a frame, and a reinforcement system. The electrochemical cell includes a first catalyst layer, a second catalyst layer spaced apart from the first catalyst layer along a first axis, and a membrane located between the first catalyst layer and the second catalyst layer. The membrane is formed to include an active area and a non-active area located on each side of the active area of the membrane along a second axis that is perpendicular to the first axis. The frame includes an upper frame arranged above the non-active area of the membrane relative to the first axis and a lower frame arranged below the non-active area of the membrane relative to the first axis. The reinforcement system is configured to increase a mechanical stability of the electrochemical cell. The reinforcement system includes an outer layer and a core layer. The outer layer is arranged between the upper frame and the lower frame relative to the first axis and located on each side of the electrochemical cell relative to the second axis. The core layer is arranged on each side of the first catalyst layer and the second catalyst layer relative to the second axis and the core layer is arranged between the upper frame and the lower frame relative to the first axis.

In some embodiments, the electrochemical cell may be a fuel cell. In some embodiments, the electrochemical cell may be an electrolyzer cell. In some embodiments, the upper frame may include a first upper plate and a second upper plate spaced apart from the first upper plate relative to the second axis. In some embodiments, the first upper plate and the second upper plate may not overlap with the active area of the membrane.

In some embodiments, the lower frame may include a first lower plate and a second lower plate spaced apart from the first lower plate relative to the second axis. In some embodiments, the first lower plate and the second lower plate may not overlap with the active area of the membrane. In some embodiments, the first upper plate may be spaced apart from the first lower plate relative to the first axis to locate a portion of the outer layer and a portion of the core layer therebetween. In some embodiments, the second upper plate may be spaced apart from the second lower plate relative to the first axis to locate another portion of the outer layer and another portion of the core layer therebetween.

In some embodiments, the core layer may include (i) a first core sheet arranged adjacent the first catalyst layer relative to the second axis and between the first upper plate and the non-active area of the membrane relative to the first axis, (ii) a second core sheet arranged adjacent the first catalyst layer relative to the second axis and between the second upper plate and the non-active area of the membrane relative to the first axis, (iii) a third core sheet arranged adjacent the second catalyst layer relative to the second axis and between the non-active area of the membrane and the first lower plate relative to the first axis, and (iv) a fourth core sheet arranged adjacent the second catalyst layer relative to the second axis and between the non-active area of the membrane and the second lower plate relative to the first axis. In some embodiments, the first core sheet, the second core sheet, the third core sheet, and the fourth core sheet may each have a first thickness. In some embodiments, the first thickness may be equal to a second thickness of the first catalyst layer and the second catalyst layer.

In some embodiments, the first core sheet, the second core sheet, the third core sheet, and the fourth core sheet may each have a first length. In some embodiments, each of the first catalyst layer and the second catalyst layer have a second length. In some embodiments, the first length and the second length may each be less than a third length of the membrane.

In some embodiments, a sum of the first length of the first core sheet, the second length of the first catalyst layer, and the first length of the second core sheet may be equal to the third length of the membrane. In some embodiments, the frame assembly may further comprise a filler layer. In some embodiments, the filler layer may include (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis.

In some embodiments, a first thickness of the first filler sheet may be less than a second thickness of the first core sheet. In some embodiments, a first length of the first filler sheet may be less than a second length of the first core sheet.

According to a second aspect, described herein, a frame assembly comprises an electrochemical cell, a frame, and a reinforcement system. The electrochemical cell includes a first catalyst layer, a second catalyst layer spaced apart from the first catalyst layer along a first axis, and a membrane located between the first catalyst layer and the second catalyst layer. The membrane is formed to include an active area and a non-active area located on each side of the active area along a second axis that is perpendicular to the first axis. The frame includes an upper frame arranged above the membrane relative to the first axis and a lower frame arranged below the membrane relative to the first axis. The reinforcement system is configured to increase a mechanical stability of the electrochemical cell. The reinforcement system includes an outer layer, a core layer, and a filler layer. The outer layer is arranged entirely between the upper frame and the lower frame relative to the first axis. The outer layer is located on each side of the electrochemical cell, the core layer, and the filler layer relative to the second axis. The core layer is arranged on each side of the first catalyst layer and the second catalyst layer relative to the second axis and the core layer is arranged between the upper frame and the lower frame relative to the first axis. The filler layer is arranged entirely between the upper frame and the lower frame relative to the first axis.

In some embodiments, the upper frame may include a first upper plate and a second upper plate spaced apart from the first upper plate relative to the second axis. In some embodiments, the first upper plate and the second upper plate may not overlap with the active area of the membrane. In some embodiments, the lower frame may include a first lower plate and a second lower plate spaced apart from the first lower plate relative to the second axis. In some embodiments, the first lower plate and the second lower plate may not overlap with the active area of the membrane.

In some embodiments, the core layer may include (i) a first core sheet arranged adjacent the first catalyst layer relative to the second axis and between the first upper plate and the non-active area of the membrane relative to the first axis, (ii) a second core sheet arranged between the second upper plate and the non-active area of the membrane relative to the first axis and spaced apart from the first core sheet relative to the second axis to locate the first catalyst layer therebetween, (iii) a third core sheet arranged adjacent the second catalyst layer relative to the second axis and between the non-active area of the membrane and the first lower plate relative to the first axis, and (iv) a fourth core sheet arranged between the non-active area of the membrane and the second lower plate relative to the first axis and spaced apart from the third core sheet relative to the second axis to locate the second catalyst layer therebetween.

In some embodiments, the filler layer may include (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis. In some embodiments, the first filler sheet may adhere to each of the first upper plate, the outer layer, and the first core sheet. In some embodiments, the first core sheet may adhere to each of the first filler sheet, the outer layer, and the non-active area of the membrane.

In some embodiments, the first filler sheet may have a first thickness and a first length, the first core sheet may have a second thickness and a second length. In some embodiments, the first thickness may be less than the second thickness and the first length may be less than the second length. In some embodiments, the outer layer may include (i) a first outer sheet arranged adjacent the first filler sheet, the first core sheet, and the membrane, (ii) a second outer sheet arranged between the first outer sheet and the first lower plate relative to the first axis and adjacent the membrane, the third core sheet, and the third filler sheet, (iii) a third outer sheet arranged adjacent the second filler sheet, the second core sheet, and the membrane, and (iv) a fourth outer sheet arranged between the third outer sheet and the second lower plate relative to the first axis and adjacent the membrane, the fourth core sheet, and the fourth filler sheet.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is perspective view of an electrolyzer cell stack according to the present disclosure;
FIG. 2B is a schematic view of an electrolysis system configured to utilize the electrolyzer cells stack of FIG. 2A;
FIG. 2C is a schematic view of an additional portion of the electrolysis system of FIG. 2B;
FIG. 3A is a diagrammatic view of a frame assembly including an electrochemical cell, a frame arranged around the electrochemical cell, and a reinforcement system arranged between the electrochemical cell and the frame;
FIG. 3B is a diagrammatic view of the frame assembly of FIG. 3A assembled with a gas diffusion layer and a bipolar plate on each side of the frame assembly;
FIG. 4 is a diagrammatic view of the electrochemical cell and a portion of the reinforcement system of FIG. 3A during manufacturing, the electrochemical cell including a first catalyst layer, a second catalyst layer, and a membrane arranged therebetween, the reinforcement system including a core layer coupled to the membrane;
FIG. 5 is a diagrammatic view of the frame and a portion of the reinforcement system of FIG. 3A during manufacturing, the reinforcement system including an outer layer coupled to the frame;
FIG. 6 is a diagrammatic view of the electrochemical cell, the frame, and the reinforcement system of FIG. 3A during manufacturing;
FIG. 7 is a diagrammatic view of another embodiment of the reinforcement system for use with the electrochemical cell and the frame of FIG. 3A;
FIG. 8 is a diagrammatic view of the electrochemical cell and a portion of the reinforcement system of FIG. 7 during manufacturing, the reinforcement system including a core layer coupled to the membrane of the electrochemical cell;
FIG. 9 is a diagrammatic view of the frame and a portion of the reinforcement system of FIG. 7 during manufacturing, the reinforcement system including an outer layer coupled to the frame and a filler layer coupled to the frame adjacent the outer layer;
FIG. 10 is a diagrammatic view of the electrochemical cell, the frame, and the reinforcement system of FIG. 7 during manufacturing;
FIG 11 is a diagrammatic view of another embodiment of the reinforcement system for use with the electrochemical cell and the frame of FIG. 3A;
FIG. 12 is a diagrammatic view of the electrochemical cell and a portion of the reinforcement system of FIG. 11 during manufacturing, the reinforcement system including a core layer coupled to the membrane of the electrochemical cell; and
FIG. 13 is a diagrammatic view of the frame and the reinforcement system of FIG. 11 during manufacturing, the reinforcement system including an outer layer coupled to the frame.

### DETAILED DESCRIPTION

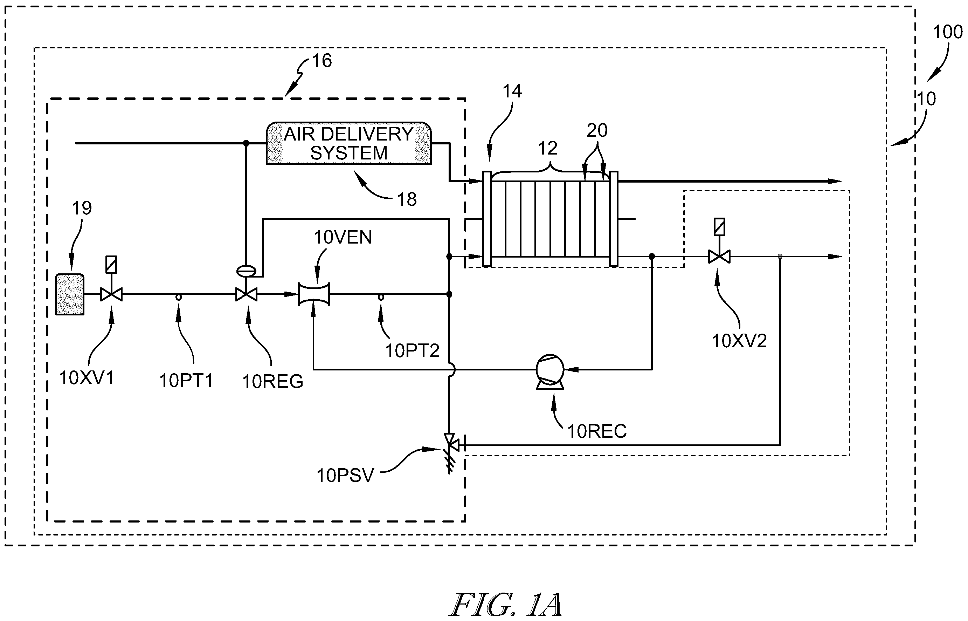

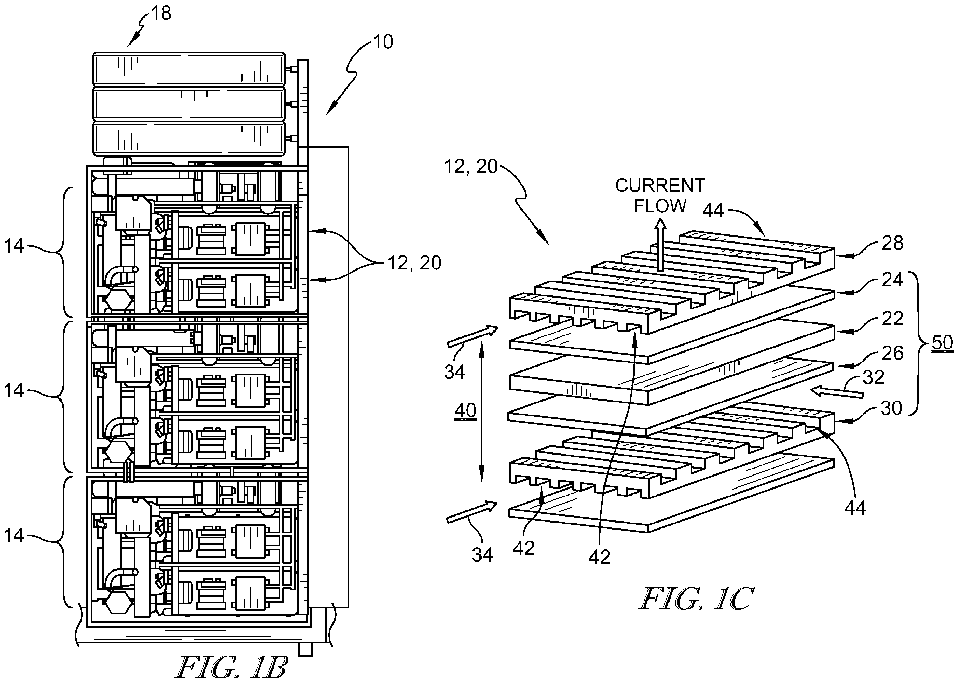

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and gas diffusion layers (GDL) 24, 26 on either or both sides of the membrane electrode assembly (MEA) 22 (see FIG. 1C). The fuel cell 20 further includes a bipolar plate (BPP) 28, 30 on the external side of each gas diffusion layers (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plate (BPP) 28, 30.

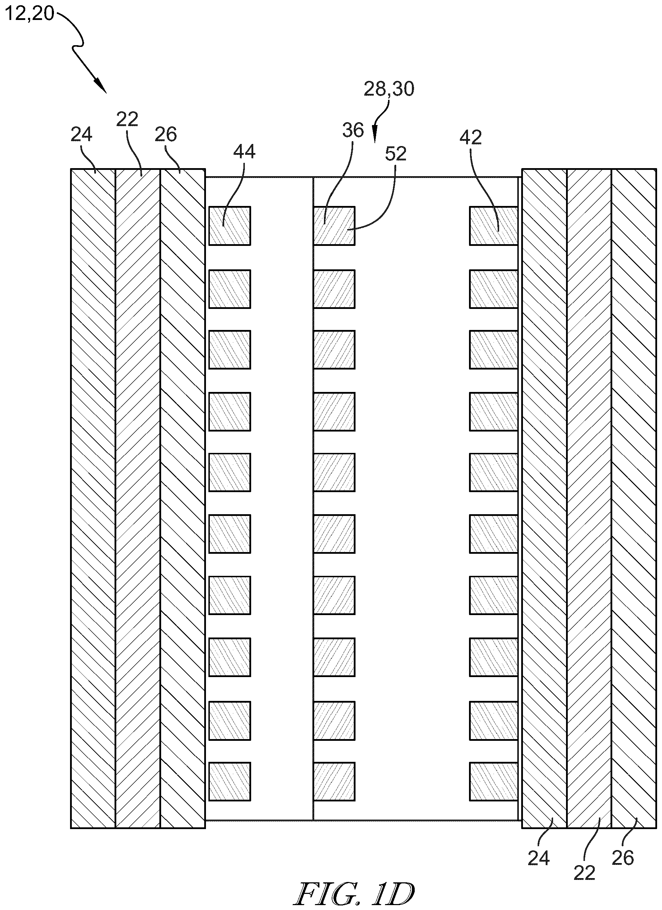

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power system, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system, or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 10VEN. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

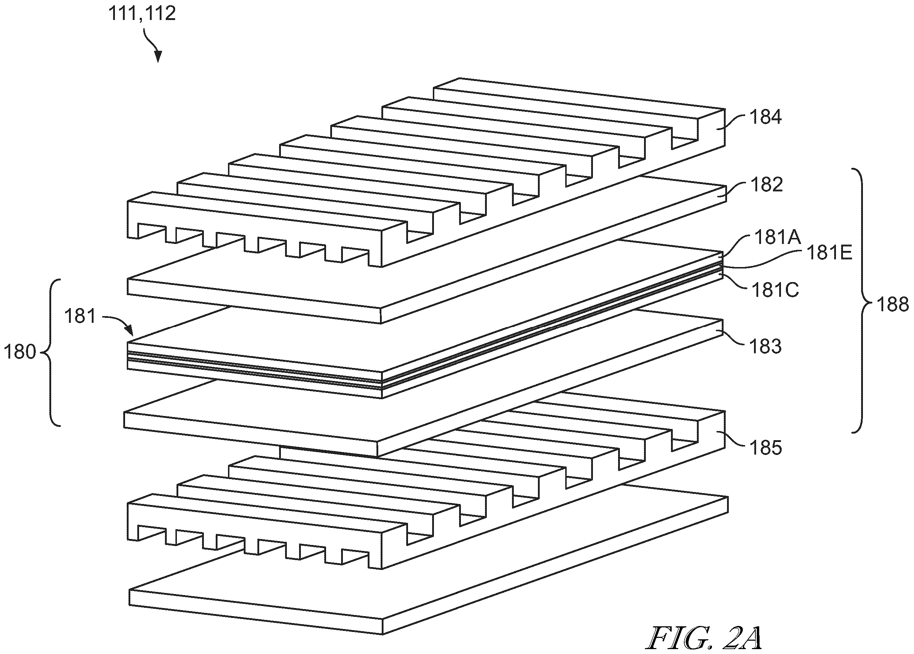

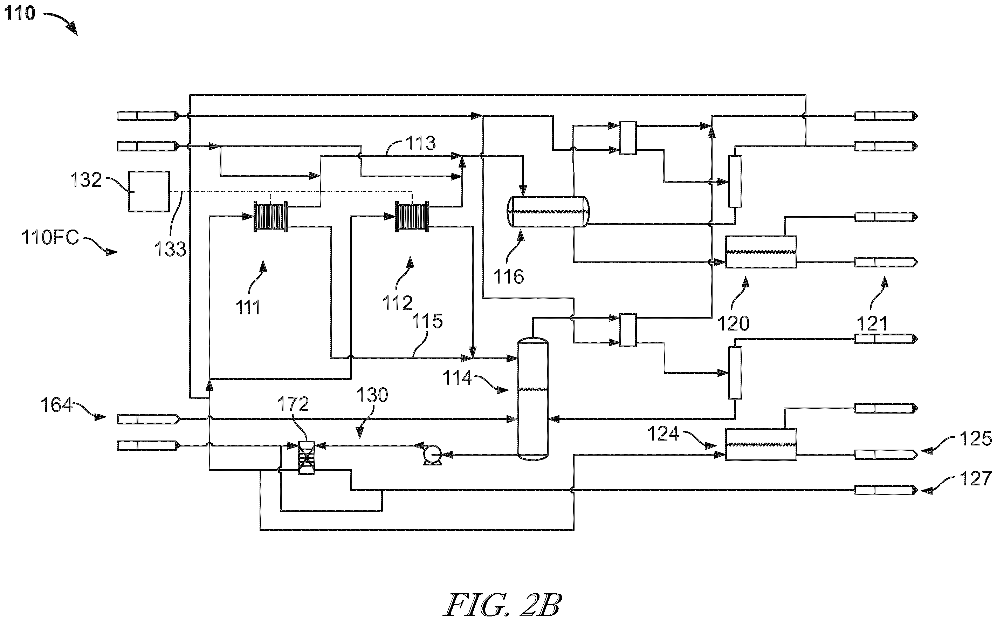

As shown in FIGS. 2A and 2B, electrolysis systems 110 are typically configured to utilize water and electricity to produce hydrogen and oxygen. An electrolysis system 110 typically includes one or more electrolyzer cells 180 that utilize electricity to chemically produce substantially pure hydrogen 113 and oxygen 115 from deionized water 130. Often the electrical source for the electrolysis systems 110 is produced from power or energy generation systems, including renewable energy systems such as wind, solar, hydroelectric, and geothermal sources for the production of green hydrogen. In turn, the pure hydrogen produced by the electrolysis systems 110 is often utilized as a fuel or energy source for those same power generation systems, such as fuel cell systems. Alternatively, the pure hydrogen produced by the electrolysis systems 110 may be stored for later use.

The typical electrolyzer cell 180, or electrolytic cell, is comprised of multiple assemblies compressed and bound into a single assembly, and multiple electrolyzer cells 180 may be stacked relative to each other, along with bipolar plates (BPP) 184, 185 therebetween, to form an electrolyzer cell stack (for example, electrolyzer cell stacks 111, 112 in FIG. 2B). Each electrolyzer cell stack 111, 112 may house a plurality of electrolyzer cells 180 connected together in series and/or in parallel. The number of electrolyzer cell stacks 111, 112 in the electrolysis systems 110 can vary depending on the amount of power required to meet the power need of any load (e.g., fuel cell stack). The number of electrolyzer cells 180 in an electrolyzer cell stack 111, 112 can vary depending on the amount of power required to operate the electrolysis systems 110 including the electrolyzer cell stack 111, 112.

An electrolyzer cell 180 includes a multi-component membrane electrode assembly (MEA) 181 that has an electrolyte 181E, an anode 181A, and a cathode 181C. Typically, the anode 181A, cathode 181C, and electrolyte 181E of the membrane electrode assembly (MEA) 181 are configured in a multi-layer arrangement that enables the electrochemical reaction to produce hydrogen and/or oxygen via contact of the water with one or more gas diffusion layers 182, 183. The gas diffusion layers (GDL) 182, 183, which may also be referred to as porous transport layers (PTL), are typically located on one or both sides of the MEA 181. Bipolar plates (BPP) 184, 185 often reside on either side of the GDLs 182, 183 and separate the individual electrolyzer cells 180 of the electrolyzer cell stack 111, 112 from one another. One bipolar plate 185 and the adjacent gas diffusion layers 182, 183 and MEA 181 can form a repeating unit 188.

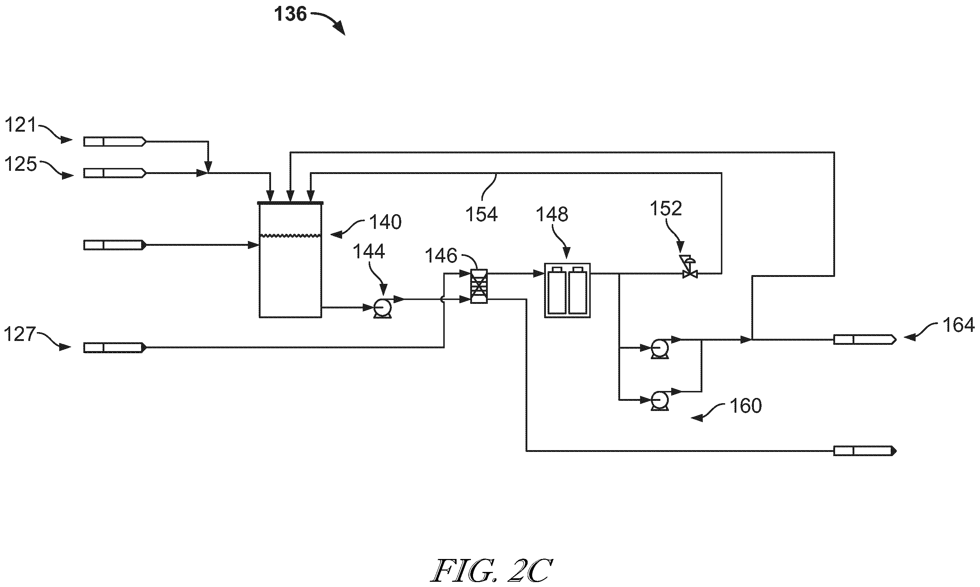

As shown in FIGS. 2B and 2C, an exemplary electrolysis system 110 can include two electrolyzer cell stacks 111, 112 and a fluidic circuit 110FC including the various fluidic pathways shown in FIGS. 2B and 2C that is configured to circulate, inject, and purge fluid and other components to and from the electrolysis systems 110. A person skilled in the art would understand that one or a variety of a number of components within the fluidic circuit 110FC, as well as more or less than two electrolyzer cell stacks 111, 112, may be utilized in the electrolysis systems 110. For example, the electrolysis systems 110 may include one electrolyzer cell stack 111, and in other examples, the electrolysis systems 110 may include three or more electrolyzer cell stacks.

The electrolysis systems 110 may include one or more types of electrolyzer cell stacks 111, 112 therein. In the illustrated embodiment, a polymer electrolyte membrane (PEM) electrolyzer cell 180 may be utilized in the stacks 111, 112. A PEM electrolyzer cell 180 typically operates at about 4°C to about 150°C, including any specific or range of temperatures comprised therein. A PEM electrolyzer cell 180 also typically functions at about 100 bar or less, but can go up to about 1000 bar (including any specific or range of pressures comprised therein), which reduces the total energy demand of the system. A standard electrochemical reaction that occurs in a PEM electrolyzer cell 180 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 180 may be utilized in the electrolysis systems 110. A solid oxide electrolyzer cell 180 will function at about 500°C to about 1000°C, including any specific or range of temperatures comprised therein. A standard electrochemical reaction that occurs in a solid oxide electrolyzer cell 180 to produce hydrogen is as follows.
- Anode: 2O²⁻ → O₂ + 4e⁻
- Cathode: 2H₂O + 4e⁻ → 2H₂ + 2O²⁻
- Overall: 2H₂O (liquid) → 2H₂ + O₂

Moreover, an AEM electrolyzer cell 180 may utilized, which uses an alkaline media. An exemplary AEM electrolyzer cell 180 is an alkaline electrolyzer cell 180. Alkaline electrolyzer cells 180 comprise aqueous solutions, such as potassium hydroxide (KOH) and/or sodium hydroxide (NaOH), as the electrolyte. Alkaline electrolyzer cells 180 typically perform at operating temperatures ranging from about 0°C to about 150°C, including any specific or range of temperatures comprised therein. Alkaline electrolyzer cell 180 generally operate at pressures ranging from about 1 bar to about 100 bar, including any specific or range of pressures comprised therein. A typical hydrogen-generating electrochemical reaction that occurs in an alkaline electrolyzer cell 180 is as follows.
- Anode: 4OH⁻ → O₂ + 2H₂O + 4e⁻
- Cathode: 4H₂O + 4e⁻ → 2H₂ + 4OH⁻
- Overall: 2 H₂O → 2H₂ + O₂

As shown in FIG. 2B, the electrolyzer cell stacks 111, 112 include one or more electrolyzer cells 180 that utilize electricity to chemically produce substantially pure hydrogen and oxygen from water. In turn, the pure hydrogen produced by the electrolyzer may be utilized as a fuel or energy source. As shown in FIG. 2B, the electrolyzer cell stack 111, 112 outputs the produced hydrogen along a fluidic connecting line 113 to a hydrogen separator 116, and also outputs the produced oxygen along a fluidic connecting line 115 to an oxygen separator 114.

The hydrogen separator 116 may be configured to output pure hydrogen gas and also send additional output fluid to a hydrogen drain tank 120, which then outputs fluid to a deionized water drain 121. The oxygen separator 114 may output fluid to an oxygen drain tank 124, which in turn outputs fluid to a deionized water drain 125. A person skilled in the art would understand that certain inputs and outputs of fluid may be pure water or other fluids such as coolant or byproducts of the chemical reactions of the electrolyzer cell stacks 111, 112. For example, oxygen and hydrogen may flow away from the cell stacks 111, 112 to the respective separators 114, 116. The system 110 may further include a rectifier 132 configured to convert electricity 133 flowing to the cell stacks 111, 112 from alternating current (AC) to direct current (DC).

The deionized water drains 121, 125 each output to a deionized water tank 140, which is part of a polishing loop 136 of the fluidic circuit 110FC, as shown in FIG. 2C. Water with ion content can damage electrolyzer cell stacks 111, 112 when the ionized water interacts with internal components of the electrolyzer cell stacks 111, 112. The polishing loop 136, shown in greater detail in FIG. 2C, is configured to deionize the water such that it may be utilized in the cell stacks 111, 112 and not damage the cell stacks 111, 112.

In the illustrated embodiment, the deionized water tank 140 outputs fluid, in particular water, to a deionized water polishing pump 144. The deionized water polishing pump 144 in turn outputs the water to a water polishing heat exchanger 146 for polishing and treatment. The water then flows to a deionized water resin tank 148.

Coolant is directed through the electrolysis systems 110, in particular through a deionized water heat exchanger 172 that is fluidically connected to the oxygen separator 114. The coolant used to cool said water may also be subsequently fed to the water polishing heat exchanger 146 via a coolant input 127 for polishing. The coolant is then output back to the deionized water heat exchanger 172 for cooling the water therein.

After the water is output from the deionized water polishing heat exchanger 146 and subsequently to the deionized water resin tank 148, a portion of the water may be fed to deionized water high pressure feed pumps 160. Another portion of the water may be fed to a deionized water pressure control valve 152, as shown in FIG. 2C. The portion of the water that is fed to the deionized water pressure control valve 152 flows through a recirculation fluidic connection 154 that allows the water to flow back to the deionized water tank 140 for continued polishing.

In some embodiments, the electrolysis systems 110 may increase deionized water skid for polishing water flow to flush out ions within the water at a faster rate. The portion of the water that is fed to the deionized water high pressure feed pumps 160 is then output to a deionized water feed 164, which then flows into the oxygen separator 114 for recirculation and eventual reusage in the electrolyzer cell stacks 111, 112. This process may then continuously repeat.

The electrolysis systems 110 described herein, may be used in stationary and/or immovable power system, such as industrial applications and power generation plants. The electrolysis systems 110 may also be implemented in conjunction with other electrolysis systems 110.

The present electrolysis systems 110 may be comprised in stationary or mobile applications. The electrolysis systems 110 may be in the vehicle or the powertrain 100. The vehicle or powertrain 100 comprising the electrolysis systems 110 may be an automobile, a pass car, a bus, a truck, a train, a locomotive, an aircraft, a light duty vehicle, a medium duty vehicle, or a heavy duty vehicle.

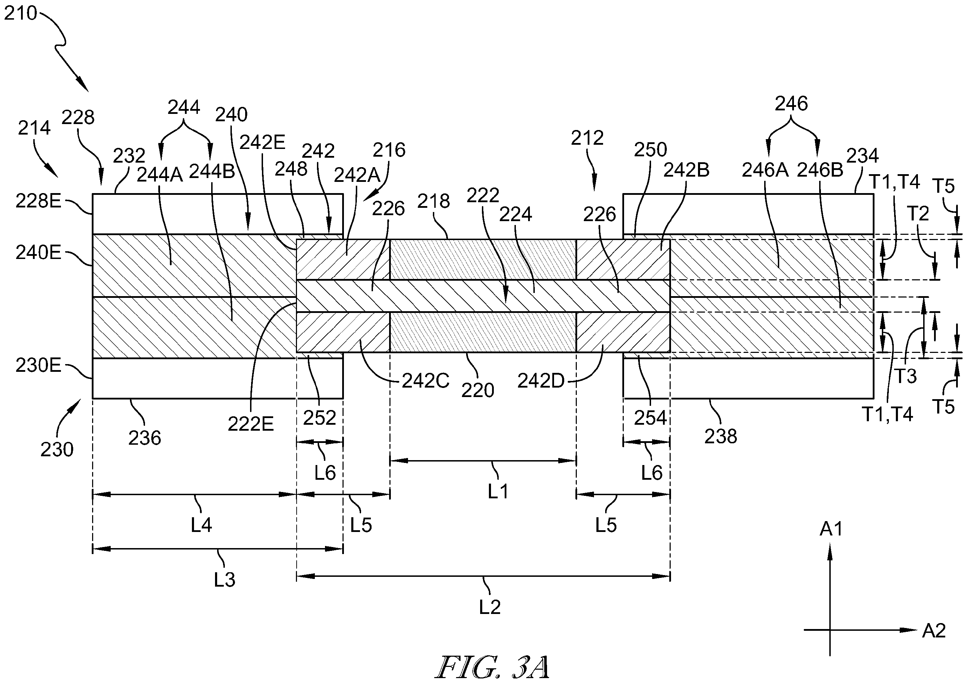

The present disclosure provides a frame assembly 210 including an electrochemical cell 212, as shown in FIG. 3A. In addition to the electrochemical cell 212, the frame assembly 210 comprises a frame 214 and a reinforcement system 216, as shown in FIG. 3A.

The electrochemical cell 212 includes a first catalyst layer 218, a second catalyst layer 220, and/or a membrane 222, as shown in FIG. 3A. The first catalyst layer 218 may be the anode 181A, as described above. The second catalyst layer 220 may be the cathode 181C, as described above. The membrane 222 may be the electrolyte 181E, as described above. The electrochemical cell 212 may be a fuel cell, such as the fuel cell 20 described above, or an electrolyzer cell, such as the electrolyzer cell 180 as described above.

The first catalyst layer 218 and the second catalyst layer 220 are spaced apart from one another along a first axis A1, as shown in FIG. 3A. The membrane 222 is arranged between the first catalyst layer 218 and the second catalyst layer 220 relative to the first axis A1.

The first catalyst layer 218 and the second catalyst layer 220 each have a first length L1, as shown in FIG. 3A. The membrane 222 has a second length L2 that is greater than the first length L1 of the first catalyst layer 218 and the second catalyst layer 220. The first catalyst layer 218 and the second catalyst layer 220 each have a first thickness T1, as shown in FIG. 3A. In some embodiments, the membrane 222 has a second thickness T2 that is less than the first thickness T1 of the catalyst layers 218, 220. In some embodiments, the second thickness T2 of the membrane 222 may be greater than the first thickness T1 of the catalyst layers 218, 220. In some embodiments, the catalyst layers 218, 220 may have different thicknesses from one another.

The membrane 222 is formed to include an active area 224 that interfaces with the catalyst layers 218, 220 and a non-active area 226 located on each side of the active area 224 relative to a second axis A2 that is perpendicular to the first axis A1, as shown in FIG. 3A. In illustrative embodiments, the first axis A1 and the second axis A2 are perpendicular to one another. In some embodiments, the first axis A1 may be a vertical axis, and the second axis A2 may be a horizontal axis. In some embodiments, the second axis A2 may be a vertical axis, and the first axis A1 may be a horizontal axis. In other embodiments, the first and second axes A1, A2 may be vertical, horizontal, diagonal, and/or any orientation. The active area 224 of the membrane 222 is the portion of the membrane 222 that overlaps with and interfaces with each of the first catalyst layer 218 and the second catalyst layer 220. The non-active area 226 of the membrane 222 is the portion of the membrane 222 that does not overlap with or interface with each of the first catalyst layer 218 and the second catalyst layer 220.

The frame 214 includes an upper frame 228 arranged above the electrochemical cell 212 and a lower frame 230 arranged below the electrochemical cell 212 relative to the first axis A1, as shown in FIG. 3A. In other words, the upper frame 228 is arranged on a first side of the electrochemical cell 212 relative to the first axis A1, and the lower frame 230 is arranged on a second side of the electrochemical cell 212 opposite the first side relative to the first axis A1. The upper frame 228 overlaps with a portion of the non-active area 226 of the membrane 222. The lower frame 230 overlaps with a portion of the non-active area 226 of the membrane 222. The upper frame 228 and the lower frame 230 do not overlap with the active area 224 of the membrane 222.

The upper frame 228 includes a first upper plate 232 and a second upper plate 234, as shown in FIG. 3A. The first upper plate 232 and the second upper plate 234 are spaced apart from one another relative to the second axis A2. The lower frame 230 includes a first lower plate 236 and a second lower plate 238. The first lower plate 236 and the second lower plate 238 are spaced apart from one another relative to the second axis A2. The first upper plate 232 is aligned with the first lower plate 236 along the second axis A2, and the second upper plate 234 is aligned with the second lower plate 238 along the second axis A2.

Each of the first upper plate 232, the second upper plate 234, the first lower plate 236, and the second lower plate 238 have the same length, also referred to as a third length L3, as shown in FIG. 3A. The third length L3 is greater than the first length L1 of the catalyst layers 218, 220 and less than the second length L2 of the membrane 222.

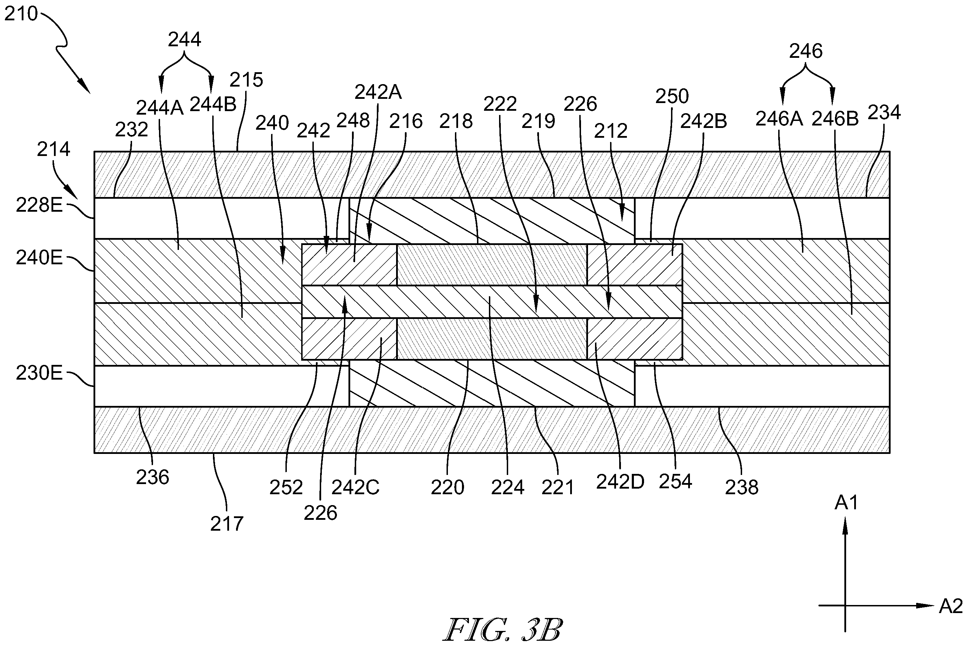

In some embodiments, the frame 214 is formed of polyethylene naphthalate (PEN). In some embodiments, the frame 214 is formed of polyethylene terephthalate (PET), such as biaxially oriented polyethylene terephthalate (BOPET). The frame 214 interfaces with bipolar plates 215, 217 arranged above and below the frame 214 relative to the first axis A1, as shown in FIG. 3B. The bipolar plates 215, 217 may be any of the bipolar plates 28, 30, 184, 185, as described above. The frame 214 also interfaces with gas diffusion layers 219, 221. The gas diffusion layers 219, 221 may be any of the gas diffusion layers 24, 26, 182, 183, as described above.

The gas diffusion layer 219 is arranged between the first upper plate 232 and the second upper plate 234 relative to the second axis A2, as shown in FIG. 3B. The bipolar plate 215 is arranged above the first upper plate 232, the gas diffusion layer 219, and the second upper plate 234. The gas diffusion layer 221 is arranged between the first lower plate 236 and the second lower plate 238 relative to the second axis A2. The bipolar plate 217 is arranged below the first lower plate 236, the gas diffusion layer 221, and the second lower plate 238.

The reinforcement system 216 includes an outer layer 240 and a core layer 242, as shown in FIG. 3A. Illustratively, the outer layer 240 and the core layer 242 are formed of adhesive materials, which are discussed in more detail below, such that the outer layer 240 and the core layer 242 bind and/or adhere to the surrounding components. The reinforcement system 216 is configured to increase a mechanical stability of the frame assembly 210.

Generally, membranes in typical or known cells in the art extend outwardly to outer edges of the frame (i.e., to outer edges 228E and 230E of the frame 214, as shown in FIG. 3A). In these typical cells, a large portion of the membrane does not overlap with the catalyst layers, which results in design instability around the large, non-overlapping portion of the membrane. As such, the reinforcement system 216 provided herein provides structural integrity to outer portions of the membrane 222 that do not overlap with the catalyst layers 218, 220 (i.e., the non-active area 226 of the membrane 222) in a way that known cell designs do not.

Specifically, the present reinforcement system 216 improves reliability of the electrochemical cell 212 by preventing edge burs and eliminating punching issues that may result in holes in the membrane 222 causing membrane degradation. Therefore, the reinforcement system 216 increases mechanical stability of the electrochemical cell 212 and eliminates failure of the membrane 222 near the outer edges of the membrane 222 (i.e., at the non-active area 226 of the membrane 222). Further, as compared to typical or known cells, a length of the membrane 222 is reduced because the membrane 222 does not extend to the outer edges 228E, 230E of the frame 214, which reduces the cost and difficulty in manufacturing of the electrochemical cell 212.

The outer layer 240 is arranged between the upper frame 228 and the lower frame 230 relative to the first axis A1, as shown in FIG. 3A. An outer edge 228E of the upper frame 228 and an outer edge 230E of the lower frame 230 are aligned with an outer edge 240E of the outer layer 240, as shown in FIG. 3A, such that the outer edges 228E, 230E, 240E are flush with one another. The outer layer 240 is located on each side of the electrochemical cell 212 relative to the second axis A2. In some embodiments, the outer layer 240 is formed of adhesive materials comprising acrylic adhesives, epoxies, polyamides, silicone adhesives, combinations thereof, or other suitable alternatives.

The outer layer 240 has a first outer portion 244 and a second outer portion 246, as shown in FIG. 3A. The first outer portion 244 is arranged between the first upper plate 232 of the upper frame 228 and the first lower plate 236 of the lower frame 230. The second outer portion 246 is arranged between the second upper plate 234 of the upper frame 228 and the second lower plate 238 of the lower frame 230. The second outer portion 246 of the outer layer 240 is spaced apart from the first outer portion 244 of the outer layer 240 along the second axis A2 such that the electrochemical cell 212 is arranged therebetween.

In some embodiments, the first outer portion 244 is formed to include a first sheet 244A coupled and/or adhered with the first upper plate 232 and a second sheet 244B coupled and/or adhered with the first lower plate 236, as shown in FIG. 3A. In some embodiments, the second outer portion 246 is formed to include a first sheet 246A coupled and/or adhered with the second upper plate 234 and a second sheet 246B coupled and/or adhered with the second lower plate 238.

A fourth length L4 of each of the sheets 244A, 244B, 246A, 246B of the outer layer 240 is less than the third length L3 of the first upper plate 232, the second upper plate 234, the first lower plate 236, and the second lower plate 238, as shown in FIG. 3A. The sheets 244A, 244B, 246A, 246B of the outer layer 240 each have the same thickness, which is also referred to as a third thickness T3. The third thickness T3 is greater than the first thickness T1 of the catalyst layers 218, 220 and the second thickness T2 of the membrane 222.

In some embodiments, the outer layer 240 is formed to include a first filler portion 248, a second filler portion 250, a third filler portion 252, and/or a fourth filler portion 254, as shown in FIG. 3A. The first filler portion 248 extends from the first sheet 244A of the first outer portion 244 along the second axis A2 toward the first sheet 246A of the second outer portion 246. The second filler portion 250 extends from the first sheet 246A of the second outer portion 246 along the second axis A2 toward the first sheet 244A of the first outer portion 244. The third filler portion 252 extends from the second sheet 244B of the first outer portion 244 along the second axis A2 toward the second sheet 246B of the second outer portion 246. The fourth filler portion 254 extends from the second sheet 246B of the second outer portion 246 along the second axis A2 toward the second sheet 244B of the first outer portion 244.

A fifth thickness T5 of each of the filler portions 248, 250, 252, 254 is the same, as shown in FIG. 3A. The fifth thickness T5 is less than the first thickness T1 of the catalyst layers 218, 220, the second thickness T2 of the membrane 222, and the third thickness T3 of each of the sheets 244A, 244B, 246A, 246B of the outer layer 240.

Each of the filler portions 248, 250, 252, 254 has the same length, which is referred to as a sixth length L6, as shown in FIG. 3A. The sixth length L6 is less than the first length L1 of the catalyst layers 218, 220, the second length L2 of the membrane 222, the third length L3 of the upper plates 232, 234 and the lower plates 236, 238, and the fourth length L4 of the sheets 244A, 244B, 246A, 246B of the outer layer 240.

As previously mentioned, in addition to the outer layer 240, the reinforcement system 216 comprises the core layer 242, as shown in FIG. 3A. In some embodiments, the core layer 242 is formed of an adhesive material comprising a polyimide film. In some embodiments, the core layer 242 is formed of other polyimide-based adhesive materials or polyimide films with specific advantageous properties, such as, but not limited to, Upilex or Kaptrex. In some embodiments, the core layer 242 is formed of other adhesive materials, such as aliphatic polyamides, including, but not limited to Nylon.

The core layer 242 is arranged on each side of the first catalyst layer 218 and the second catalyst layer 220 relative to the second axis A2, as shown in FIG. 3A. The core layer 242 is arranged between the upper frame 228 and the lower frame 230 relative to the first axis A1. The core layer 242 includes a first core sheet 242A, a second core sheet 242B, a third core sheet 242C, and a fourth core sheet 242D, as shown in FIG. 3A.

The first core sheet 242A is arranged adjacent the first catalyst layer 218 and between the first upper plate 232 and the non-active area 226 of the membrane 222 relative to the first axis A1. The second core sheet 242B is arranged adjacent the first catalyst layer 218 on an opposing side of the first catalyst layer 218 than the first core sheet 242A. The second core sheet 242B is arranged between the second upper plate 234 and the non-active area 226 of the membrane 222 relative to the first axis A1. The second core sheet 242B is spaced apart from the first core sheet 242A relative to the second axis A2 to locate the first catalyst layer 218 therebetween.

The third core sheet 242C is arranged adjacent the second catalyst layer 220 and between the non-active area 226 of the membrane 222 and the first lower plate 236 relative to the first axis A1, as shown in FIG. 3A. The fourth core sheet 242D is arranged adjacent the second catalyst layer 220 on an opposing side of the second catalyst layer 220 than the third core sheet 242C. The fourth core sheet 242D is arranged between the non-active area 226 of the membrane 222 and the second lower plate 238 relative to the first axis A1. The fourth core sheet 242D is spaced apart from the third core sheet 242C relative to the second axis A2 to locate the second catalyst layer 220 therebetween.

The first core sheet 242A contacts and/or adheres to each of the first filler portion 248, the first sheet 244A of the outer layer 240, the non-active area 226 of the membrane 222, and the first catalyst layer 218, as shown in FIG. 3A. The entirety of the first core sheet 242A overlaps with the non-active area 226 of the membrane 222. The first filler portion 248 and the first upper plate 232 overlap with only a portion of the first core sheet 242A.

The second core sheet 242B contacts and/or adheres to each of the second filler portion 250, the first sheet 246A of the outer layer 240, the non-active area 226 of the membrane 222, and the first catalyst layer 218, as shown in FIG. 3A. The entirety of the second core sheet 242B overlaps with the non-active area 226 of the membrane 222. The second filler portion 250 and the second upper plate 234 overlap with only a portion of the second core sheet 242B.

The third core sheet 242C contacts and/or adheres to each of the third filler portion 252, the second sheet 244B of the outer layer 240, the non-active area 226 of the membrane 222, and the second catalyst layer 220, as shown in FIG. 3A. The entirety of the third core sheet 242C overlaps with the non-active area 226 of the membrane 222. The third filler portion 252 and the first lower plate 236 overlap with only a portion of the third core sheet 242C.

The fourth core sheet 242D contacts and/or adheres to each of the fourth filler portion 254, the second sheet 246B of the outer layer 240, the non-active area 226 of the membrane 222, and the second catalyst layer 220, as shown in FIG. 3A. The entirety of the fourth core sheet 242D overlaps with the non-active area 226 of the membrane 222. The fourth filler portion 254 and the second lower plate 238 overlap with only a portion of the fourth core sheet 242D.

The first outer portion 244 of the outer layer 240 contacts and/or adheres to each of the first upper plate 232, the first filler portion 248, the first core sheet 242A, the non-active area 226 of the membrane 222, the third core sheet 242C, the third filler portion 252, and the first lower plate 236, as shown in FIG. 3A. The second outer portion 246 of the outer layer 240 contacts and/or adheres to each of the second upper plate 234, the second filler portion 250, the second core sheet 242B, the non-active area 226 of the membrane 222, the fourth core sheet 242D, the fourth filler portion 254, and the second lower plate 238.

An outer edge 242E of each of the core sheets 242A, 242B, 242C, 242D is aligned with an outer edge 222E of the membrane 222, as shown in FIG. 3A. In other words, the outer edge 242E of each of the core sheets 242A, 242B, 242C, 242D is flush with the outer edge 222E of the membrane 222.

Each of the core sheets 242A, 242B, 242C, 242D has the same thickness, which is referred to as a fourth thickness T4, as shown in FIG. 3A. The fourth thickness T4 is equal to the first thickness T1 of the first catalyst layer 218 and the second catalyst layer 220. The fourth thickness T4 is greater than the second thickness T2 of the membrane 222. The fourth thickness T4 of each of the core sheets 242A, 242B, 242C, 242D is less than the third thickness T3 of each of the sheets 244A, 244B, 246A, 246B of the outer layer 240. The fourth thickness T4 is greater than the fifth thickness T5 of each of the filler portions 248, 250, 252, 254.

Each of the core sheets 242A, 242B, 242C, 242D has the same length, which is referred to as a fifth length L5, as shown in FIG. 3A. The fifth length L5 is less than the first length L1 of the catalyst layers 218, 220, the second length L2 of the membrane 222, the third length L3 of the upper plates 232, 234 and the lower plates 236, 238, and the fourth length L4 of the sheets 244A, 244B, 246A, 246B of the outer layer 240. The fifth length L5 is greater than the sixth length L6 of each of the filler portions 248, 250, 252, 254.

A sum of the fifth length L5 of the first core sheet 242A, the first length L1 of the first catalyst layer 218, and the fifth length L5 of the second core sheet 242B is equal to the second length L2 of the membrane 222, as shown in FIG. 3A. Because the non-active area 226 of the membrane 222 is located on each side of the active area 224 of the membrane 222 relative to the second axis A2, a length of the non-active area 226 of the membrane 222 is equal to two times the fifth length L5 (i.e., the length of the first core sheet 242A plus the length of the second core sheet 242B).

In some embodiments, the first filler portion 248, the second filler portion 250, the third filler portion 252, and/or the fourth filler portion 254 are omitted. In such an embodiment, a gap is formed between the corresponding upper frame 228/lower frame 230 and the core layer 242 relative to the first axis A1.

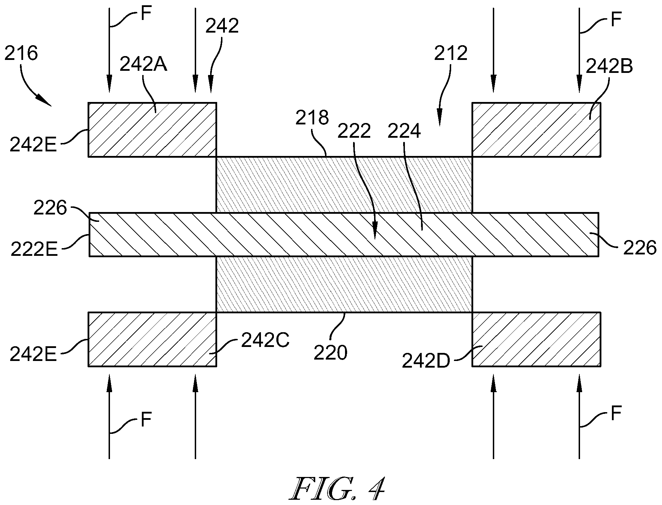

To manufacture the frame assembly 210, the core sheets 242A, 242B, 242C, 242D are adhered to the membrane 222 and the catalyst layers 218, 220, as shown in FIG. 4. For example, each of the core sheets 242A, 242B, 242C, 242D is adhered to the non-active area 226 of the membrane 222 at opposing corners of the membrane 222. The core sheets 242A, 242B, 242C, 242D may be adhered to the membrane 222 by pressing the core sheets 242A, 242B, 242C, 242D to the membrane 222 with a force F.

In some embodiments, the core sheets 242A, 242B, 242C, 242D may be pressed to the membrane 222 via a hot press. In some embodiments, the core sheets 242A, 242B, 242C, 242D may be pressed to the membrane 222 via a cold press. In some embodiments, the core sheets 242A, 242B, 242C, 242D may be mechanically pressed to the membrane 222 (i.e., via a machine or hand pressed). In some embodiments, the core sheets 242A, 242B, 242C, 242D may be roller pressed to the membrane 222 via hot, cold, or room-temperature rollers. The core sheets 242A, 242B, 242C, 242D may be applied to the membrane 222 in a tape form, a film form, a glue form, a paste form, a liquid form, a pellet form, an atomized form, a spray form, or any other suitable form.

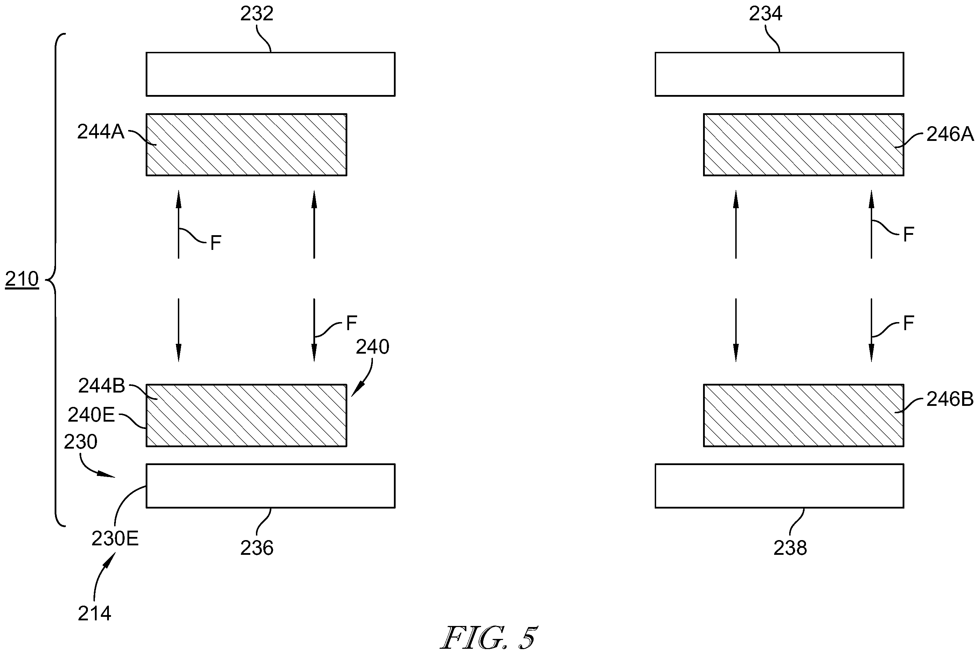

The outer layer 240 is adhered to the frame 214, as shown in FIG. 5. For example, the first sheet 244A of the first outer portion 244 of the outer layer 240 is adhered to the first upper plate 232. The second sheet 244B of the first outer portion 244 of the outer layer 240 is adhered to the first lower plate 236, as shown in FIG. 5. The first sheet 246A of the second outer portion 246 of the outer layer 240 is adhered to the second upper plate 234. The second sheet 246B of the second outer portion 246 of the outer layer 240 is adhered to the second lower plate 238, as shown in FIG. 5.

The outer layer 240 may be adhered to the corresponding plate 232, 234, 236, 238 by pressing the outer layer 240 to the corresponding plate 232, 234, 236, 238 with a force F. In some embodiments, the outer layer 240 may be pressed to the corresponding plate 232, 234, 236, 238 via a hot press. In some embodiments, the outer layer 240 may be pressed to the corresponding plate 232, 234, 236, 238 via a cold press. In some embodiments, the outer layer 240 may be mechanically pressed to the corresponding plate 232, 234, 236, 238 (i.e., via a machine or hand pressed). In some embodiments, the outer layer 240 may be roller pressed to the corresponding plate 232, 234, 236, 238 via hot, cold, or room-temperature rollers. The outer layer 240 may be applied to the frame 214 in a tape form, a film form, a glue form, a paste form, a liquid form, a pellet form, an atomized form, a spray form, or any other suitable form.

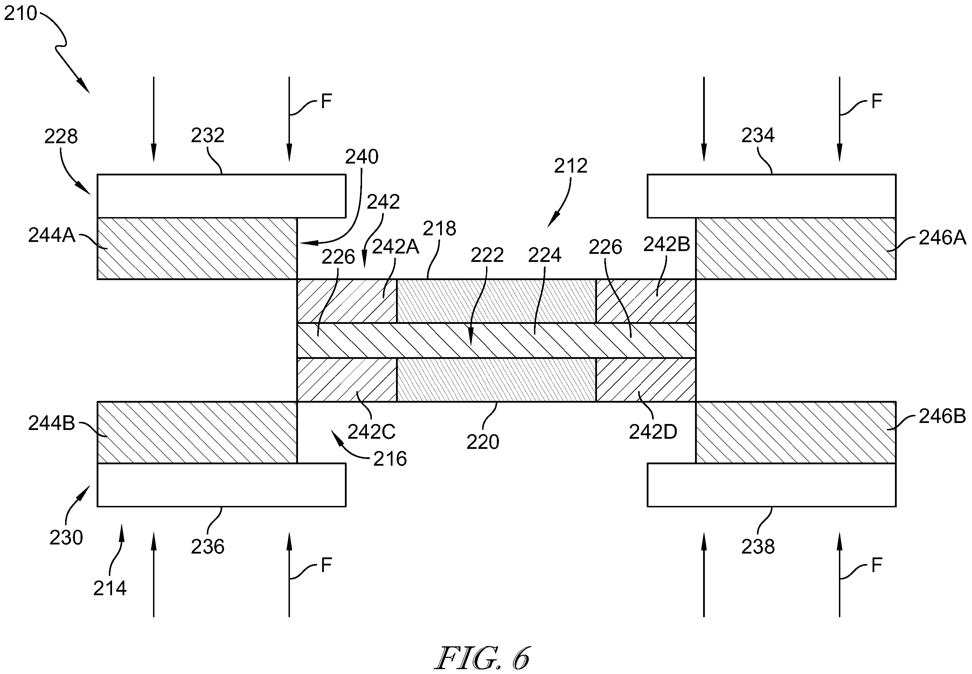

The combined outer layer 240 and the frame 214 is then adhered to the combined cell 212 and the core layer 242, as shown in FIG. 6. For example, the first sheet 244A of the first outer portion 244 of the outer layer 240 is adhered to the core sheet 242A, the membrane 222, and the second sheet 244B of the first outer portion 244 of the outer layer 240. The second sheet 244B of the first outer portion 244 of the outer layer 240 is adhered to the core sheet 242C, the membrane 222, and the first sheet 244A. The first sheet 246A of the second outer portion 246 of the outer layer 240 is adhered to the core sheet 242B, the membrane 222, and the second sheet 246B of the second outer portion 246 of the outer layer 240. The second sheet 246B of the second outer portion 246 of the outer layer 240 is adhered to the core sheet 242D, the membrane 222, and the first sheet 246A of the second outer portion 246 of the outer layer 240.

The combined outer layer 240 and the frame 214 may be adhered to the combined cell 212 and the core layer 242 by pressing the two components together with a force F, as shown in FIG. 6. In some embodiments, the combined outer layer 240 and the frame 214 may be pressed to the combined cell 212 and the core layer 242 via a hot press. In some embodiments, the combined outer layer 240 and the frame 214 may be pressed to the combined cell 212 and the core layer 242 via a cold press. In some embodiments, the combined outer layer 240 and the frame 214 may be mechanically pressed to the combined cell 212 and the core layer 242 (i.e., via a machine or hand pressed). In some embodiments, the combined outer layer 240 and the frame 214 may be roller pressed to the combined cell 212 and the core layer 242 via hot, cold, or room-temperature rollers.

When the combined outer layer 240 and the frame 214 is pressed to the combined cell 212 and the core layer 242, portions of the outer layer 240 may be forced to move along the second axis A2 to fill a gap formed between the core sheet 242A, 242B, 242C, 242D and the corresponding upper frame 228 or the corresponding lower frame 230. In this way, the filler portions 248, 250, 252, 254 of the outer layer 240 are formed, as shown in FIG. 3A.

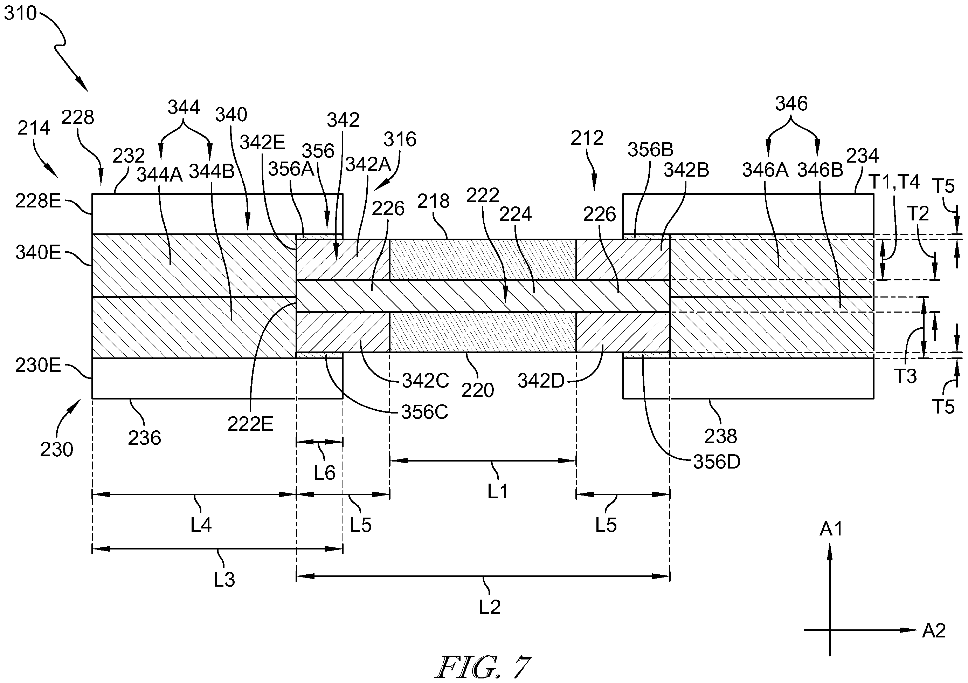

The present disclosure provides alternative reinforcement systems 316 for use with the electrochemical cell 212 and the frame 214, as described above. FIG. 7 illustrates another embodiment of a frame assembly 310 that is substantially similar to the frame assembly 210. However, the frame assembly 310 includes a different reinforcement system 316. In the absence of disclosure to the contrary, the features and components of the frame assembly 210 are applicable and present for the frame assembly 310.

The reinforcement system 316 includes an outer layer 340, a core layer 342, and/or a filler layer 356, as shown in FIG. 7. The outer layer 340 is arranged between the upper frame 228 and the lower frame 230 relative to the first axis A1. The outer edge 228E of the upper frame 228 and the outer edge 230E of the lower frame 230 are aligned with an outer edge 340E of the outer layer 340, as shown in FIG. 7, such that the outer edges 228E, 230E, 340E are flush with one another. The outer layer 340 is located on each side of the electrochemical cell 212 relative to the second axis A2. In some embodiments, the outer layer 340 is formed of acrylic adhesives, epoxies, polyamides, silicone adhesives, or other suitable alternatives.

The outer layer 340 has a first outer portion 344 and a second outer portion 346, as shown in FIG. 7. The first outer portion 344 is arranged between the first upper plate 232 of the upper frame 228 and the first lower plate 236 of the lower frame 230. The second outer portion 346 is arranged vertically between the second upper plate 234 of the upper frame 228 and the second lower plate 238 of the lower frame 230. The second outer portion 346 of the outer layer 340 is spaced apart from the first outer portion 344 of the outer layer 340 relative to the second axis A2 to locate the electrochemical cell 212 therebetween.

In some embodiments, the first outer portion 344 is formed to include a first sheet 344A coupled and/or adhered with the first upper plate 232 and a second sheet 344B coupled and/or adhered with the first lower plate 236, as shown in FIG. 7. In some embodiments, the second outer portion 346 is formed to include a first sheet 346A coupled and/or adhered with the second upper plate 234 and a second sheet 346B coupled and/or adhered with the second lower plate 238.

A fourth length L4 of each of the sheets 344A, 344B, 346A, 346B is less than the third length L3 of the first upper plate 232, the second upper plate 234, the first lower plate 236, and the second lower plate 238, as shown in FIG. 7. The sheets 344A, 344B, 346A, 346B each have the same third thickness T3. The third thickness T3 is greater than the first thickness T1 of the catalyst layers 218, 220 and the second thickness T2 of the membrane 222.

The core layer 342 is arranged on each side of the first catalyst layer 218 and the second catalyst layer 220 relative to the second axis A2, as shown in FIG. 7. The core layer 342 is arranged between the upper frame 228 and the lower frame 230 relative to the first axis A1.

The core layer 342 includes a first core sheet 342A, a second core sheet 342B, a third core sheet 342C, and a fourth core sheet 342D, as shown in FIG. 7. The first core sheet 342A is arranged adjacent the first catalyst layer 218 and between the first upper plate 232 and the non-active area 226 of the membrane 222 relative to the first axis A1. The second core sheet 342B is arranged adjacent the first catalyst layer 218 on an opposing side of the first catalyst layer 218 than the first core sheet 342A. The second core sheet 342B is arranged between the second upper plate 234 and the non-active area 226 of the membrane 222 relative to the first axis A1. The second core sheet 342B is spaced apart from the first core sheet 342A relative to the second axis A2 to locate the first catalyst layer 218 therebetween.

The third core sheet 342C is arranged adjacent the second catalyst layer 220 and between the non-active area 226 of the membrane 222 and the first lower plate 236 relative to the first axis A1, as shown in FIG. 7. The fourth core sheet 342D is arranged adjacent the second catalyst layer 220 on an opposing side of the second catalyst layer 220 than the third core sheet 342C. The fourth core sheet 342D is arranged between the non-active area 226 of the membrane 222 and the second lower plate 238 relative to the first axis A1. The fourth core sheet 342D is spaced apart from the third core sheet 342C relative to the second axis A2 to locate the second catalyst layer 220 therebetween.

An outer edge 342E of each of the core sheets 342A, 342B, 342C, 342D is aligned with the outer edge 222E of the membrane 222, as shown in FIG. 7. In other words, the outer edge 342E of each of the core sheets 342A, 342B, 342C, 342D is flush with the outer edge 222E of the membrane 222.

Each of the core sheets 342A, 342B, 342C, 342D has the same fourth thickness T4, as shown in FIG. 7. The fourth thickness T4 is equal to the first thickness T1 of the first catalyst layer 218 and the second catalyst layer 220. The fourth thickness T4 is greater than the second thickness T2 of the membrane 222. The fourth thickness T4 of each of the core sheets 342A, 342B, 342C, 342D is less than the third thickness T3 of each of the first sheet 344A, the second sheet 344B, the first sheet 346A, and the second sheet 346B.

Each of the core sheets 342A, 342B, 342C, 342D has the same length, also referred to as a fifth length L5, as shown in FIG. 7. The fifth length L5 is less than the first length L1 of the catalyst layers 218, 220, the second length L2 of the membrane 222, the third length L3 of the upper plates 232, 234 and the lower plates 236, 238, and the fourth length L4 of the sheets 344A, 344B, 346A, 346B.

A sum of the fifth length L5 of the first core sheet 342A, the first length L1 of the first catalyst layer 218, and the fifth length L5 of the second core sheet 342B is equal to the second length L2 of the membrane 222, as shown in FIG. 7. Because the non-active area 226 of the membrane 222 is located on each side of the active area 224 of the membrane 222 relative to the second axis A2, a length of the non-active area 226 of the membrane 222 is equal to two times the fifth length L5 (i.e., the length of the first core sheet 342A plus the length of the second core sheet 342B).

In some embodiments, the core layer 342 is formed of polyimide film. In some embodiments, the core layer 342 is formed of other polyimide-based materials, such as, but not limited to, Upilex or Kaptrex. In some embodiments, the core layer 342 is formed of aliphatic polyamides, such as, but not limited to Nylon.

The filler layer 356 of the reinforcement system 316 is arranged between the core layer 342 and the upper frame 228 or the lower frame 230 relative to the first axis A1, as shown in FIG. 7. The filler layer 356 includes a first filler sheet 356A, a second filler sheet 356B, a third filler sheet 356C, and a fourth filler sheet 356D. In some embodiments, the filler layer 356 is formed of polyethylene naphthalate (PEN).

The first filler sheet 356A is positioned between the first upper plate 232 and the first core sheet 342A of the core layer 342 relative to the first axis A1, as shown in FIG. 7. The second filler sheet 356B is positioned between the second upper plate 234 and the second core sheet 342B of the core layer 342 relative to the first axis A1. The third filler sheet 356C is positioned between the third core sheet 342C of the core layer 342 and the first lower plate 236 relative to the first axis A1. The fourth filler sheet 356D is positioned between the fourth core sheet 342D of the core layer 342 and the second lower plate 238 relative to the first axis A1.

A fifth thickness T5 of each of the filler sheets 356A, 356B, 356C, 356D is the same, as shown in FIG. 7. The fifth thickness T5 is less than the first thickness T1 of the catalyst layers 218, 220, the second thickness T2 of the membrane 222, the third thickness T3 of each of the sheets 344A, 344B, 346A, 346B, and the fourth thickness T4 of the core sheets 342A, 342B, 342C, 342D.

Each of the filler sheets 356A, 356B, 356C, 356D has the same length, which is referred to as a sixth length L6, as shown in FIG. 7. The sixth length L6 is less than the first length L1 of the catalyst layers 218, 220, the second length L2 of the membrane 222, the third length L3 of the upper plates 232, 234 and the lower plates 236, 238, the fourth length L4 of the sheets 344A, 344B, 346A, 346B, and the fifth length L5 of the core sheets 342A, 342B, 342C, 342D.

As shown in FIG. 7, the first core sheet 342A contacts and/or adheres to each of the first filler sheet 356A, the first sheet 344A of the outer layer 340, the non-active area 226 of the membrane 222, and the first catalyst layer 218. The entirety of the first core sheet 342A overlaps with the non-active area 226 of the membrane 222. The first filler sheet 356A and the first upper plate 232 overlap with only a portion of the first core sheet 342A.

The second core sheet 342B contacts and/or adheres to each of the second filler sheet 356B, the first sheet 346A of the outer layer 340, the non-active area 226 of the membrane 222, and the first catalyst layer 218, as shown in FIG. 7. The entirety of the second core sheet 342B overlaps with the non-active area 226 of the membrane 222. The second filler sheet 356B and the second upper plate 234 overlap with only a portion of the second core sheet 342B.

The third core sheet 342C contacts and/or adheres to each of the third filler sheet 356C, the second sheet 344B of the outer layer 340, the non-active area 226 of the membrane 222, and the second catalyst layer 220, as shown in FIG. 7. The entirety of the third core sheet 342C overlaps with the non-active area 226 of the membrane 222. The third filler sheet 356C and the first lower plate 236 overlap with only a portion of the third core sheet 342C.

The fourth core sheet 342D contacts and/or adheres to each of the fourth filler sheet 356D, the second sheet 346B of the outer layer 340, the non-active area 226 of the membrane 222, and the second catalyst layer 220, as shown in FIG. 7. The entirety of the fourth core sheet 342D overlaps with the non-active area 226 of the membrane 222. The fourth filler sheet 356D and the second lower plate 238 overlap with only a portion of the fourth core sheet 342D.

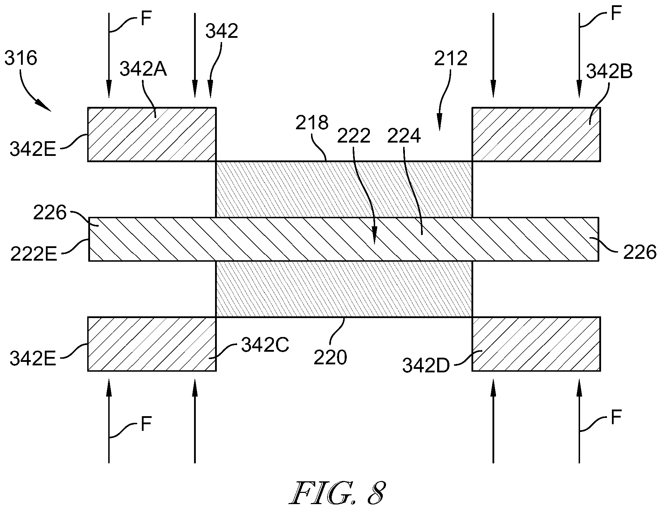

To manufacture the frame assembly 310, the core sheets 342A, 342B, 342C, 342D are adhered to the membrane 222 and the catalyst layers 218, 220, as shown in FIG. 8. For example, each of the core sheets 342A, 342B, 342C, 342D is adhered to the non-active area 226 of the membrane 222 at opposing corners of the membrane 222. The core sheets 342A, 342B, 342C, 342D may be adhered to the membrane 222 by pressing the core sheets 342A, 342B, 342C, 342D to the membrane 222 with a force F. In some embodiments, the core sheets 342A, 342B, 342C, 342D may be pressed to the membrane 222 via a hot press. In some embodiments, the core sheets 342A, 342B, 342C, 342D may be pressed to the membrane 222 via a cold press. In some embodiments, the core sheets 342A, 342B, 342C, 342D may be mechanically pressed to the membrane 222 (i.e., via a machine or hand pressed). In some embodiments, the core sheets 342A, 342B, 342C, 342D may be roller pressed to the membrane 222 via hot, cold, or room-temperature rollers. The core sheets 342A, 342B, 342C, 342D may be applied to the membrane 222 in a tape form, a film form, a glue form, a paste form, a liquid form, a pellet form, an atomized form, a spray form, or any other suitable form.

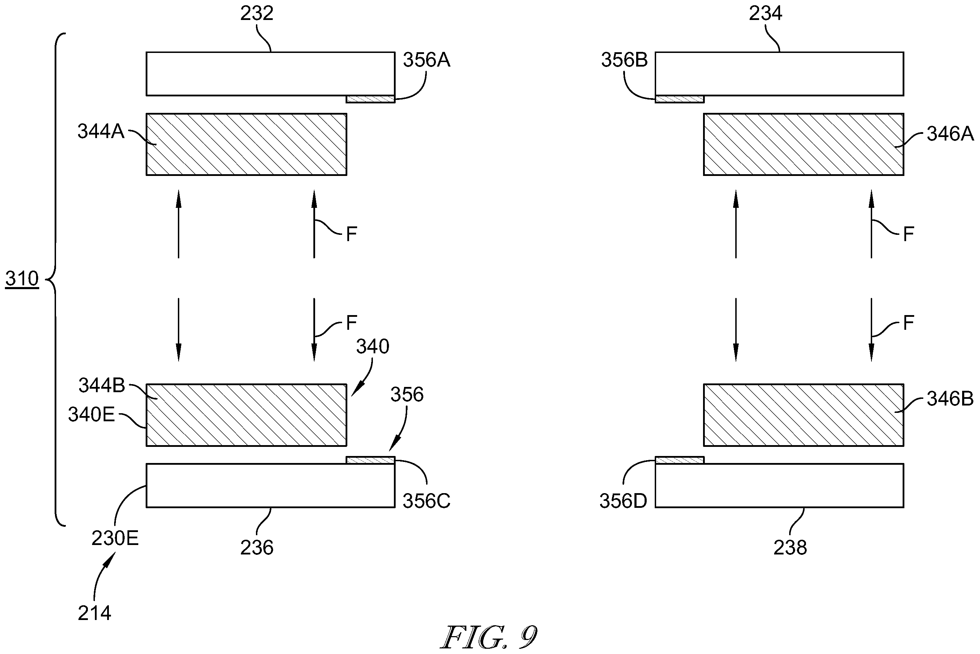

The filler layer 356 is illustratively formed as part of the frame 214, as suggested in FIG. 9. The outer layer 340 is adhered to the frame 214, as shown in FIG. 9. For example, the first sheet 344A of the first outer portion 344 of the outer layer 340 is adhered to the first upper plate 232 so that the first sheet 344A is positioned adjacent the first filler sheet 356A, as shown in FIG. 9. The second sheet 344B of the first outer portion 344 of the outer layer 340 is adhered to the first lower plate 236 so that the second sheet 344B is positioned adjacent the third filler sheet 356C, as shown in FIG. 9. The first sheet 346A of the second outer portion 346 of the outer layer 340 is adhered to the second upper plate 234 so that the first sheet 346A is positioned adjacent the second filler sheet 356B. The second sheet 346B of the second outer portion 346 of the outer layer 340 is adhered to the second lower plate 238 so that the second sheet 346B is positioned adjacent the fourth filler sheet 356D, as shown in FIG. 9.

The outer layer 340 may be adhered to the corresponding plate 232, 234, 236, 238 by pressing the outer layer 340 to the corresponding plate 232, 234, 236, 238 with a force F, as shown in FIG. 9. In some embodiments, the outer layer 340 may be pressed to the corresponding plate 232, 234, 236, 238 via a hot press. In some embodiments, the outer layer 340 may be pressed to the corresponding plate 232, 234, 236, 238 via a cold press. In some embodiments, the outer layer 340 may be mechanically pressed to the corresponding plate 232, 234, 236, 238 (i.e., via a machine or hand pressed). In some embodiments, the outer layer 340 may be roller pressed to the corresponding plate 232, 234, 236, 238 via hot, cold, or room-temperature rollers. The outer layer 340 may be applied to the frame 214 in a tape form, a film form, a glue form, a paste form, a liquid form, a pellet form, an atomized form, a spray form, or any other suitable form.

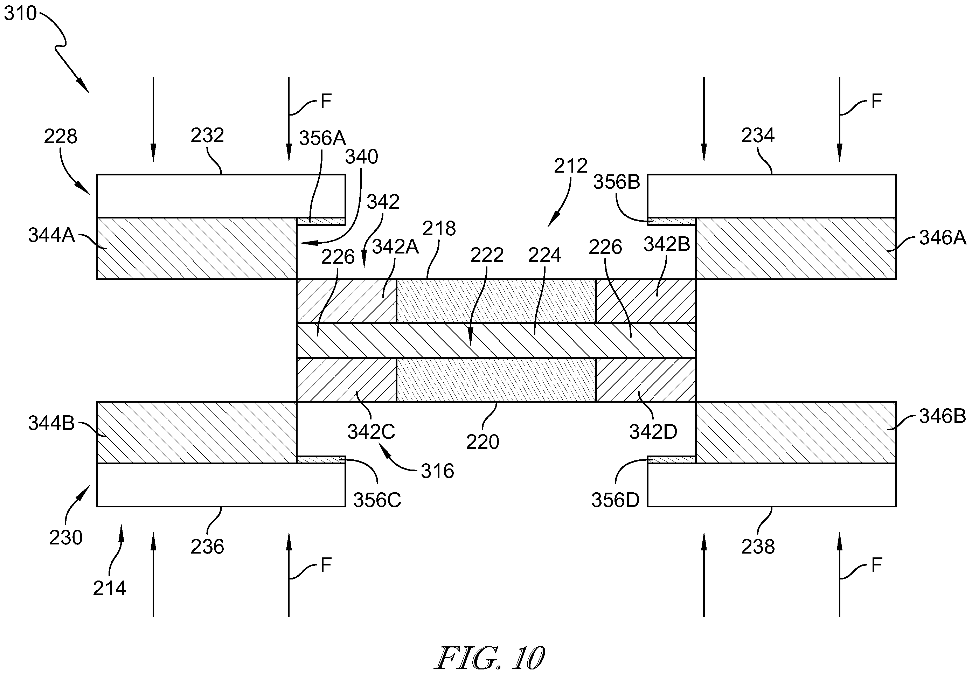

The combined outer layer 340, the filler layer 356, and the frame 214 is then adhered to the combined cell 212 and the core layer 342, as shown in FIG. 10. For example, the first sheet 344A of the outer layer 340 is adhered to the core sheet 342A, the membrane 222, and the second sheet 344B of the outer layer 340, while the first filler sheet 356A is adhered to the core sheet 342A. The second sheet 344B of the outer layer 340 is adhered to the core sheet 342C, the membrane 222, and the first sheet 344A, while the third filler sheet 356C is adhered to the core sheet 342C.

The first sheet 346A of the outer layer 340 is adhered to the core sheet 342B, the membrane 222, and the second sheet 346B of the outer layer 340, while the second filler sheet 356B is adhered to the core sheet 342B, as shown in FIG. 10. The second sheet 346B of the outer layer 340 is adhered to the core sheet 342D, the membrane 222, and the first sheet 346A of the outer layer 340, while the fourth filler sheet 356D is adhered to the core sheet 342D.

The combined outer layer 340, the filler layer 356, and the frame 214 may be adhered to the combined cell 212 and the core layer 342 by pressing the two components together with a force F, as shown in FIG. 10. In some embodiments, the combined outer layer 340, the filler layer 356, and the frame 214 may be pressed to the combined cell 212 and the core layer 342 via a hot press. In some embodiments, the combined outer layer 340, the filler layer 356, and the frame 214 may be pressed to the combined cell 212 and the core layer 342 via a cold press. In some embodiments, the combined outer layer 340, the filler layer 356, and the frame 214 may be mechanically pressed to the combined cell 212 and the core layer 342 (i.e., via a machine or hand pressed). In some embodiments, the combined outer layer 340, the filler layer 356, and the frame 214 may be roller pressed to the combined cell 212 and the core layer 342 via hot, cold, or room-temperature rollers.

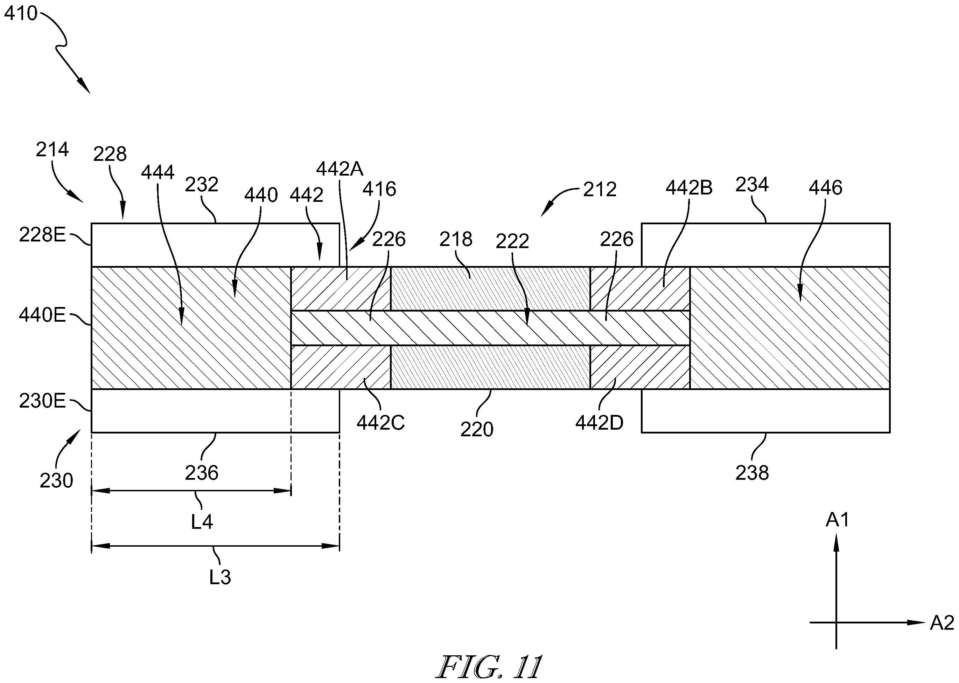

The present disclosure provides alternative reinforcement systems 416 for use with the electrochemical cell 212 and the frame 214, as described above. FIG. 11 illustrates another embodiment of a frame assembly 410 that is substantially similar to the frame assembly 210. However, the frame assembly 410 includes a different reinforcement system 416. In the absence of disclosure to the contrary, the features and components of the frame assembly 210 are applicable and present for the frame assembly 410.

The present disclosure provides a frame assembly 410 including the electrochemical cell 212, the frame 214, and the reinforcement system 416, as shown in FIG. 11. The reinforcement system 416 includes an outer layer 440 and a core layer 442, as shown in FIG. 11. The core layer 442 is identical to the core layer 242, as previously described.

The outer layer 440 is arranged between the upper frame 228 and the lower frame 230 relative to the first axis A1, as shown in FIG. 11. The outer edge 228E of the upper frame 228 and the outer edge 230E of the lower frame 230 are aligned with an outer edge 440E of the outer layer 440, as shown in FIG. 11, such that the outer edges 228E, 230E, 440E are flush with one another. The outer layer 440 is located on each side of the electrochemical cell 212 relative to the second axis A2.

The outer layer 440 has a first outer portion 444 and a second outer portion 446, as shown in FIG. 11. The first outer portion 444 is arranged between the first upper plate 232 of the upper frame 228 and the first lower plate 236 of the lower frame 230 relative to the first axis A1. The second outer portion 446 is arranged between the second upper plate 234 of the upper frame 228 and the second lower plate 238 of the lower frame 230 relative to the first axis A1. The second outer portion 446 of the outer layer 440 is spaced apart from the first outer portion 444 of the outer layer 440 relative to the second axis A2 such that the electrochemical cell 212 is arranged therebetween.

A fourth length L4 of each of the first outer portion 444 and the second outer portion 446 is less than the third length L3 of the first upper plate 232, the second upper plate 234, the first lower plate 236, and the second lower plate 238, as shown in FIG. 11. In some embodiments, the outer layer 440 is formed of polyimide, polyethylene terephthalate (PET), polyethylene naphthalate (PEN), or other suitable alternatives.

The core layer 442 is arranged on each side of the first catalyst layer 218 and the second catalyst layer 220 relative to the second axis A2, as shown in FIG. 11. The core layer 442 is arranged between the upper frame 228 and the lower frame 230 relative to the first axis A1.

The first outer portion 444 of the outer layer 440 contacts and/or adheres to each of the first upper plate 232, a first core sheet 442A, the non-active area 226 of the membrane 222, a third core sheet 442C, and the first lower plate 236, as shown in FIG. 11. The second outer portion 446 of the outer layer 440 contacts and/or adheres to each of the second upper plate 234, a second core sheet 442B, the non-active area 226 of the membrane 222, a fourth core sheet 442D, and the second lower plate 238.

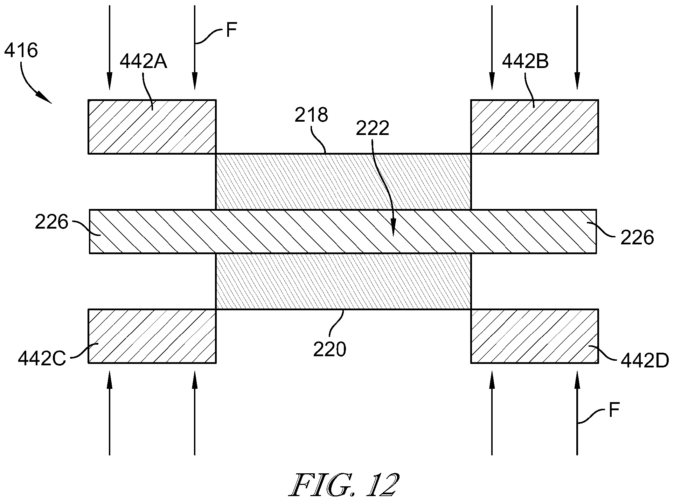

To manufacture the frame assembly 410, the core sheets 442A, 442B, 442C, 442D are adhered to the membrane 222 and the catalyst layers 218, 220, as shown in FIG. 12. For example, each of the core sheets 442A, 442B, 442C, 442D is adhered to the non-active area 226 of the membrane 222 at opposing corners of the membrane 222. The core sheets 442A, 442B, 442C, 442D may be adhered to the membrane 222 by pressing the core sheets 442A, 442B, 442C, 442D to the membrane 222 with a force F. In some embodiments, the core sheets 442A, 442B, 442C, 442D may be pressed to the membrane 222 via a hot press. In some embodiments, the core sheets 442A, 442B, 442C, 442D may be pressed to the membrane 222 via a cold press. In some embodiments, the core sheets 442A, 442B, 442C, 442D may be mechanically pressed to the membrane 222 (i.e., via a machine or hand pressed). In some embodiments, the core sheets 442A, 442B, 442C, 442D may be roller pressed to the membrane 222 via hot, cold, or room-temperature rollers. The core sheets 442A, 442B, 442C, 442D may be applied to the membrane 222 in a tape form, a film form, a glue form, a paste form, a liquid form, a pellet form, an atomized form, a spray form, or any other suitable form.

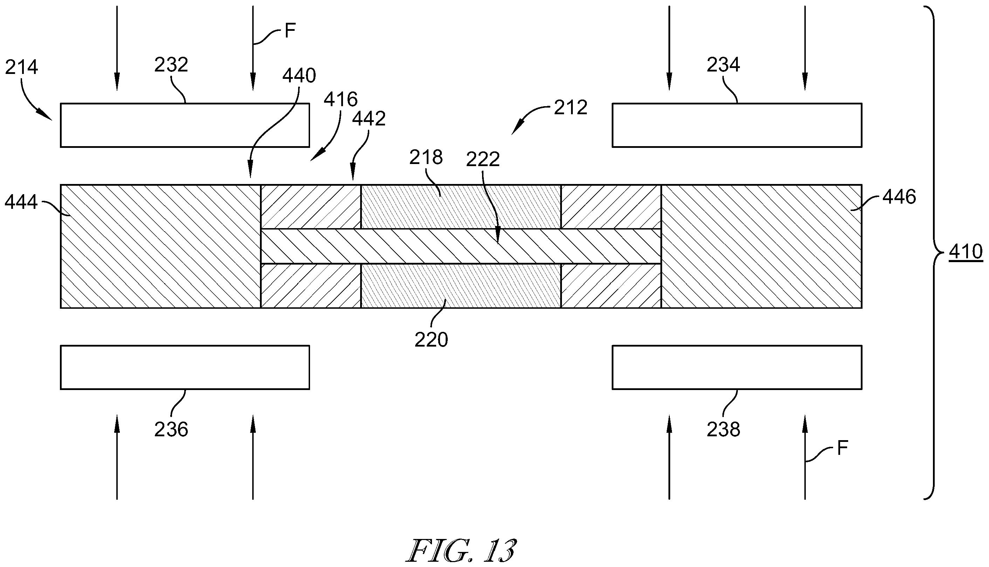

The outer layer 440, the electrochemical cell 212, and the core layer 442 is then adhered to the frame 214 by pressing the components together with a force F, as shown in FIG. 13. In some embodiments, the frame 214 may be pressed to the outer layer 440, the electrochemical cell 212, and the core layer 442 via a hot press. In some embodiments, the frame 214 may be pressed to the outer layer 440, the electrochemical cell 212, and the core layer 442 via a cold press. In some embodiments, the frame 214 may be mechanically pressed to the outer layer 440, the electrochemical cell 212, and the core layer 442 (i.e., via a machine or hand pressed). In some embodiments, the frame 214 may be roller pressed to the outer layer 440, the electrochemical cell 212, and the core layer 442 via hot, cold, or room-temperature rollers.

The following described aspects of the present invention are contemplated and nonlimiting:
A first aspect of the present invention relates to a frame assembly. The frame assembly comprises an electrochemical cell, a frame, and a reinforcement system. The electrochemical cell includes a first catalyst layer, a second catalyst layer spaced apart from the first catalyst layer along a first axis, and a membrane located between the first catalyst layer and the second catalyst layer. The membrane is formed to include an active area and a non-active area located on each side of the active area of the membrane along a second axis that is perpendicular to the first axis. The frame includes an upper frame arranged above the non-active area of the membrane relative to the first axis and a lower frame arranged below the non-active area of the membrane relative to the first axis. The reinforcement system is configured to increase a mechanical stability of the electrochemical cell. The reinforcement system includes an outer layer and a core layer. The outer layer is arranged between the upper frame and the lower frame relative to the first axis and located on each side of the electrochemical cell relative to the second axis. The core layer is arranged on each side of the first catalyst layer and the second catalyst layer relative to the second axis and the core layer is arranged between the upper frame and the lower frame relative to the first axis.

A second aspect of the present invention relates to a frame assembly. The frame assembly comprises an electrochemical cell, a frame, and a reinforcement system. The electrochemical cell includes a first catalyst layer, a second catalyst layer spaced apart from the first catalyst layer along a first axis, and a membrane located between the first catalyst layer and the second catalyst layer. The membrane is formed to include an active area and a non-active area located on each side of the active area along a second axis that is perpendicular to the first axis. The frame includes an upper frame arranged above the membrane relative to the first axis and a lower frame arranged below the membrane relative to the first axis. The reinforcement system is configured to increase a mechanical stability of the electrochemical cell. The reinforcement system includes an outer layer, a core layer, and a filler layer. The outer layer is arranged entirely between the upper frame and the lower frame relative to the first axis. The outer layer is located on each side of the electrochemical cell, the core layer, and the filler layer relative to the second axis. The core layer is arranged on each side of the first catalyst layer and the second catalyst layer relative to the second axis and the core layer is arranged between the upper frame and the lower frame relative to the first axis. The filler layer is arranged entirely between the upper frame and the lower frame relative to the first axis.

In the first aspect of the present invention, the electrochemical cell may be a fuel cell. In the first aspect of the present invention, the electrochemical cell may be an electrolyzer cell. In the first aspect of the present invention, the upper frame may include a first upper plate and a second upper plate spaced apart from the first upper plate relative to the second axis. In the first aspect of the present invention, the first upper plate and the second upper plate may not overlap with the active area of the membrane.

In the first aspect of the present invention, the lower frame may include a first lower plate and a second lower plate spaced apart from the first lower plate relative to the second axis. In the first aspect of the present invention, the first lower plate and the second lower plate may not overlap with the active area of the membrane. In the first aspect of the present invention, the first upper plate may be spaced apart from the first lower plate relative to the first axis to locate a portion of the outer layer and a portion of the core layer therebetween. In the first aspect of the present invention, the second upper plate may be spaced apart from the second lower plate relative to the first axis to locate another portion of the outer layer and another portion of the core layer therebetween.

In the first aspect of the present invention, the core layer may include (i) a first core sheet arranged adjacent the first catalyst layer relative to the second axis and between the first upper plate and the non-active area of the membrane relative to the first axis, (ii) a second core sheet arranged adjacent the first catalyst layer relative to the second axis and between the second upper plate and the non-active area of the membrane relative to the first axis, (iii) a third core sheet arranged adjacent the second catalyst layer relative to the second axis and between the non-active area of the membrane and the first lower plate relative to the first axis, and (iv) a fourth core sheet arranged adjacent the second catalyst layer relative to the second axis and between the non-active area of the membrane and the second lower plate relative to the first axis. In the first aspect of the present invention, the first core sheet, the second core sheet, the third core sheet, and the fourth core sheet may each have a first thickness. In the first aspect of the present invention, the first thickness may be equal to a second thickness of the first catalyst layer and the second catalyst layer.

In the first aspect of the present invention, the first core sheet, the second core sheet, the third core sheet, and the fourth core sheet may each have a first length. In the first aspect of the present invention, each of the first catalyst layer and the second catalyst layer have a second length. In the first aspect of the present invention, the first length and the second length may each be less than a third length of the membrane.

In the first aspect of the present invention, a sum of the first length of the first core sheet, the second length of the first catalyst layer, and the first length of the second core sheet may be equal to the third length of the membrane. In the first aspect of the present invention, the frame assembly may further comprise a filler layer. In the first aspect of the present invention, the filler layer may include (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis.

In the first aspect of the present invention, a first thickness of the first filler sheet may be less than a second thickness of the first core sheet. In the first aspect of the present invention, a first length of the first filler sheet may be less than a second length of the first core sheet.

In the second aspect of the present invention, the upper frame may include a first upper plate and a second upper plate spaced apart from the first upper plate relative to the second axis. In the second aspect of the present invention, the first upper plate and the second upper plate may not overlap with the active area of the membrane. In the second aspect of the present invention, the lower frame may include a first lower plate and a second lower plate spaced apart from the first lower plate relative to the second axis. In the second aspect of the present invention, the first lower plate and the second lower plate may not overlap with the active area of the membrane.

In the second aspect of the present invention, the core layer may include (i) a first core sheet arranged adjacent the first catalyst layer relative to the second axis and between the first upper plate and the non-active area of the membrane relative to the first axis, (ii) a second core sheet arranged between the second upper plate and the non-active area of the membrane relative to the first axis and spaced apart from the first core sheet relative to the second axis to locate the first catalyst layer therebetween, (iii) a third core sheet arranged adjacent the second catalyst layer relative to the second axis and between the non-active area of the membrane and the first lower plate relative to the first axis, and (iv) a fourth core sheet arranged between the non-active area of the membrane and the second lower plate relative to the first axis and spaced apart from the third core sheet relative to the second axis to locate the second catalyst layer therebetween.

In the second aspect of the present invention, the filler layer may include (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis. In the second aspect of the present invention, the first filler sheet may adhere to each of the first upper plate, the outer layer, and the first core sheet. In the second aspect of the present invention, the first core sheet may adhere to each of the first filler sheet, the outer layer, and the non-active area of the membrane.

In the second aspect of the present invention, the first filler sheet may have a first thickness and a first length, the first core sheet may have a second thickness and a second length. In the second aspect of the present invention, the first thickness may be less than the second thickness and the first length may be less than the second length. In the second aspect of the present invention, the outer layer may include (i) a first outer sheet arranged adjacent the first filler sheet, the first core sheet, and the membrane, (ii) a second outer sheet arranged between the first outer sheet and the first lower plate relative to the first axis and adjacent the membrane, the third core sheet, and the third filler sheet, (iii) a third outer sheet arranged adjacent the second filler sheet, the second core sheet, and the membrane, and (iv) a fourth outer sheet arranged between the third outer sheet and the second lower plate relative to the first axis and adjacent the membrane, the fourth core sheet, and the fourth filler sheet.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of' refers to a composition, compound, formulation, or method that is inclusive of additional elements, components, or method steps that do not materially affect the characteristic(s) of the composition, compound, formulation, or method. The phrase "consisting essentially of" also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. A frame assembly comprising:
an electrochemical cell including a first catalyst layer, a second catalyst layer spaced apart from the first catalyst layer along a first axis, and a membrane located between the first catalyst layer and the second catalyst layer, the membrane formed to include an active area and a non-active area located on each side of the active area of the membrane along a second axis that is perpendicular to the first axis,
a frame including an upper frame arranged above the non-active area of the membrane relative to the first axis and a lower frame arranged below the non-active area of the membrane relative to the first axis, and
a reinforcement system configured to increase a mechanical stability of the electrochemical cell, the reinforcement system including an outer layer and a core layer,
wherein the outer layer is arranged between the upper frame and the lower frame relative to the first axis and located on each side of the electrochemical cell relative to the second axis,
wherein the core layer is arranged on each side of the first catalyst layer and the second catalyst layer relative to the second axis and the core layer is arranged between the upper frame and the lower frame relative to the first axis.

2. The frame assembly of claim 1, wherein the upper frame includes a first upper plate and a second upper plate spaced apart from the first upper plate relative to the second axis, and wherein the first upper plate and the second upper plate do not overlap with the active area of the membrane, and wherein the lower frame includes a first lower plate and a second lower plate spaced apart from the first lower plate relative to the second axis, and wherein the first lower plate and the second lower plate do not overlap with the active area of the membrane.

3. The frame assembly of claim 2, wherein the first upper plate is spaced apart from the first lower plate relative to the first axis to locate a portion of the outer layer and a portion of the core layer therebetween and the second upper plate is spaced apart from the second lower plate relative to the first axis to locate another portion of the outer layer and another portion of the core layer therebetween.

4. The frame assembly of claim 2 or 3, wherein the core layer includes (i) a first core sheet arranged adjacent the first catalyst layer relative to the second axis and between the first upper plate and the non-active area of the membrane relative to the first axis, (ii) a second core sheet arranged adjacent the first catalyst layer relative to the second axis and between the second upper plate and the non-active area of the membrane relative to the first axis, (iii) a third core sheet arranged adjacent the second catalyst layer relative to the second axis and between the non-active area of the membrane and the first lower plate relative to the first axis, and (iv) a fourth core sheet arranged adjacent the second catalyst layer relative to the second axis and between the non-active area of the membrane and the second lower plate relative to the first axis.

5. The frame assembly of claim 4, wherein the first core sheet, the second core sheet, the third core sheet, and the fourth core sheet each have a first thickness, and the first thickness is equal to a second thickness of the first catalyst layer and the second catalyst layer.

6. The frame assembly of claim 4 or 5, wherein the first core sheet, the second core sheet, the third core sheet, and the fourth core sheet each have a first length, and wherein each of the first catalyst layer and the second catalyst layer have a second length, and the first length and the second length are each less than a third length of the membrane.

7. The frame assembly of claim 6, wherein a sum of the first length of the first core sheet, the second length of the first catalyst layer, and the first length of the second core sheet is equal to the third length of the membrane.

8. The frame assembly of any one of claims 4, 5, 6 or 7, further comprising a filler layer including (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis.

9. The frame assembly of claim 8, wherein a first thickness of the first filler sheet is less than a second thickness of the first core sheet, and wherein a first length of the first filler sheet is less than a second length of the first core sheet.

10. A frame assembly comprising:
an electrochemical cell including a first catalyst layer, a second catalyst layer spaced apart from the first catalyst layer along a first axis, and a membrane located between the first catalyst layer and the second catalyst layer, the membrane formed to include an active area and a non-active area located on each side of the active area along a second axis that is perpendicular to the first axis,
a frame including an upper frame arranged above the membrane relative to the first axis and a lower frame arranged below the membrane relative to the first axis, and
a reinforcement system configured to increase a mechanical stability of the electrochemical cell, the reinforcement system including an outer layer, a core layer, and a filler layer,
wherein the outer layer is arranged entirely between the upper frame and the lower frame relative to the first axis and the outer layer is located on each side of the electrochemical cell, the core layer, and the filler layer relative to the second axis,
wherein the core layer is arranged on each side of the first catalyst layer and the second catalyst layer relative to the second axis and the core layer is arranged between the upper frame and the lower frame relative to the first axis,
wherein the filler layer is arranged entirely between the upper frame and the lower frame relative to the first axis.

11. The frame assembly of claim 10, wherein the upper frame includes a first upper plate and a second upper plate spaced apart from the first upper plate relative to the second axis and the first upper plate and the second upper plate do not overlap with the active area of the membrane, and wherein the lower frame includes a first lower plate and a second lower plate spaced apart from the first lower plate relative to the second axis and the first lower plate and the second lower plate do not overlap with the active area of the membrane.

12. The frame assembly of claim **11,** wherein the core layer includes (i) a first core sheet arranged adjacent the first catalyst layer relative to the second axis and between the first upper plate and the non-active area of the membrane relative to the first axis, (ii) a second core sheet arranged between the second upper plate and the non-active area of the membrane relative to the first axis and spaced apart from the first core sheet relative to the second axis to locate the first catalyst layer therebetween, (iii) a third core sheet arranged adjacent the second catalyst layer relative to the second axis and between the non-active area of the membrane and the first lower plate relative to the first axis, and (iv) a fourth core sheet arranged between the non-active area of the membrane and the second lower plate relative to the first axis and spaced apart from the third core sheet relative to the second axis to locate the second catalyst layer therebetween.

13. The frame assembly of claim 12, wherein the filler layer includes (i) a first filler sheet arranged between the first upper plate and the first core sheet of the core layer relative to the first axis, (ii) a second filler sheet arranged between the second upper plate and the second core sheet of the core layer relative to the first axis, (iii) a third filler sheet arranged between the third core sheet of the core layer and the first lower plate relative to the first axis, and (iv) a fourth filler sheet arranged between the fourth core sheet of the core layer and the second lower plate relative to the first axis.

14. The frame assembly of claim 13, wherein the first filler sheet adheres to each of the first upper plate, the outer layer, and the first core sheet, and wherein the first core sheet adheres to each of the first filler sheet, the outer layer, and the non-active area of the membrane.

15. The frame assembly of claim 13 or 14, wherein the outer layer includes (i) a first outer sheet arranged adjacent the first filler sheet, the first core sheet, and the membrane, (ii) a second outer sheet arranged between the first outer sheet and the first lower plate relative to the first axis and adjacent the membrane, the third core sheet, and the third filler sheet, (iii) a third outer sheet arranged adjacent the second filler sheet, the second core sheet, and the membrane, and (iv) a fourth outer sheet arranged between the third outer sheet and the second lower plate relative to the first axis and adjacent the membrane, the fourth core sheet, and the fourth filler sheet.
